# EUROPÄISCHE PATENTSCHRIFT

(11) **EP 1 531 003 B1**
(45) Veröffentlichungstag und Bekanntmachung des Hinweises auf die Patenterteilung: **17.08.2016**
(21) Anmeldenummer: 04025985.5
(22) Anmeldetag: 02.11.2004
(51) Int. Cl.: B01L 3/00, G01N 1/40, B01F 13/00, B01F 5/06

(54) **Mikrostrukturierte Trennvorrichtung und Verfahren zum Abtrennen von flüssigen Bestandteilen aus einer Partikel enthaltenden Flüssigkeit**
Microstructured separation device to separate the liquid phase from a suspension
Dispositif pour separer la phase liquides d'une suspension

(30) Priorität: 07.11.2003 DE 10352535
(43) Veröffentlichungstag der Anmeldung: 18.05.2005
(73) Patentinhaber: Boehringer Ingelheim microParts GmbH, 44227 Dortmund (DE)
(72) Erfinder: Blankenstein, Gert, Dr., 44139 Dortmund (DE); Marquordt, Claus, Dipl.-Ing., 44139 Dortmund (DE)
(74) Vertreter: Graefe, Jörg

(56) Entgegenhaltungen:
- EP-A- 1 096 254
- EP-A2- 1 450 159
- WO-A2-99/35497
- US-A- 5 135 719
- US-A- 5 837 115
- US-A- 5 905 028
- US-A- 5 938 923
- US-A1- 2002 081 744
- US-A1- 2002 196 435
- US-B1- 6 184 029

## Beschreibung

Die vorliegende Erfindung betrifft eine mikrostrukturierte Trennvorrichtung zum Abtrennen von Teilen einer Flüssigkeit mit den Merkmalen des Oberbegriffs des Anspruchs 1, die flüssige Bestandteile und die zumindest einen Typ von Partikeln und/oder zumindest einen Komplex von miteinander verbundenen Partikeln zumindest eines Typs aufweist.

Aus der Patentschrift zum Patent mit der Nummer 5,837,115 ist eine Vorrichtung bekannt, die einen Einlass für die Flüssigkeit, einen Sammelabschnitt und einen Transportweg von dem Einlass zu dem Sammelabschnitt umfasst. Der Transportweg seinerseits umfasst in Transportrichtung hintereinanderliegend einen ersten Trennabschnitt zum Zurückhalten zumindest eines Teils der Komplexe und/oder zum Verzögern der Bewegung zumindest eines Teils der Komplexe und/oder zumindest eines Teils der Partikel und einen zweiten Trennabschnitt zum Zurückhalten zumindest eines Teils der Komplexe und/oder zumindest eines Teils der Partikel und/oder zum Verzögern der Bewegung der Partikel. Sowohl der erste Trennabschnitt als auch der zweite Trennabschnitt weisen eine Mikrostruktur mit einem oder mehreren Mikrostrukturelementen auf.

Aus den Dokumenten US 2002/0196435 A1, WO 99/35497 A2 und EP 1 450 159 A2 sind weitere Vorrichtungen mit Mikrostrukturen bekannt, die zum Abtrennen von Teilen einer Flüssigkeit benutzt werden können.

Die Dokumente US 2002/0196435 A1, WO 99/35497 A2 und EP 1 450 159 A2 offenbaren eine mikrostrukturierte Vorrichtung (siehe dort Fig. 4 und 5) mit einem Einlassbereich und einem Resuspensionsbereich, in dem Agglutinationsreagenzien vorgelegt sind, einen Inkubationsbereich zwischen Resuspensionsbereich und darauf folgenden mehreren Trennbereichen, wobei der Inkubationsbereich derart ausgestaltet ist, dass die Strömungsgeschwindigkeit und die Aufenthaltsdauer derart sind, dass sich im Inkubationsbereich Komplexe bilden, die in den Trennbereichen verlangsamt oder zurückbehalten werden. Die Trennbereiche weisen mikrostrukturierte Elemente auf.

Die meisten klinisch-chemischen Untersuchungen werden an zellfreien Blutflüssigkeiten, Blutplasma oder Blutserum durchgeführt, da die Blutzellen oder ihre Inhaltsstoffe die Messergebnisse verfälschen können. Für diese Abtrennung werden bislang in der Hämatologie hauptsächlich Filtrations- und Zentrifugationstechniken eingesetzt. Die vollständige Abtrennung von Blutzellen, ohne dass ihre Membranen zerstört werden und sie ihren Inhalt in die Untersuchungslösung abgeben, erreicht man beispielsweise durch eine 15-minütige Zentrifugation bei 1500 Umdrehungen/Minute. Ein solches Verfahren ist aufwendig und zeitintensiv, weshalb entsprechend nach alternativen Systemen gesucht wird. Außerdem lassen sich kleinere Volumina im Bereich weniger Mikroliter mit den hier beschriebenen gängigen Verfahren nicht handhaben, was vor allem im Bereich Point-of-Care in der klinischen Diagnostik sowie in der pharmazeutischen Wirkstoffsuche von Bedeutung ist.

Mit der Hilfe der Mikrosystemtechnik lassen sich dagegen extrem kleine Probenmengen handhaben. Zudem können viele Analysensystemkomponenten auf kleinstem Raum vereinigt werden. Medizinische Diagnostik lässt sich dadurch oftmals einfacher, kostengünstiger, patientenfreundlicher und vor allem patientennäher gestalten.

Eine mikrostrukturierte Trennvorrichtung zum Abtrennen von Hämatokrit aus Vollblut ist neben der bereits genannten Patentschrift zum Patent mit der Nummer US 5,837,115 beispielsweise aus der Druckschrift US 6,319,719 B1 bekannt. Diese Druckschrift offenbart eine Trennvorrichtung, die einen Einlass aufweist, an den sich ein kapillarer Transportweg zu einem Reaktionsbereich anschließt. Entlang des Transportweges sind viele Hindernisse angeordnet. Zum Abtrennen des Hämatokrits aus einer Probe in der Größe eines Bluttropfens enthält der kapillare Transportweg etwa 10⁵ Hindernisse. Jedes Hindernis hat eine konkave Form auf seiner stromabwärts gelegenen Seite in Bezug auf die Strömungsrichtung der Flüssigkeit. Im konkaven Bereich jedes Hindernisses liegt ein Volumen von 10⁻⁴ bis 10 ⁻⁵ Mikroliter, in welchem Hämatokrit selektiv zurückgehalten wird. Das Volumen aller konkaven Bereiche entspricht etwa dem Volumen des abzutrennenden Hämatokrits. Der Abstand zwischen den Hindernissen ist einerseits groß genug, um keinen Filtereffekt zu erzeugen, andererseits ist der Abstand klein genug, um das im kapillaren Transportweg enthaltene Flüssigkeitsvolumen zu minimieren. Der kleinste Abstand zwischen zwei Hindernissen beträgt bevorzugt etwa 10 ⁻⁵ Meter. Die Hindernisse sind bevorzugt hexagonal-dicht angeordnet.

Aufgabe der Erfindung ist es, eine Trennvorrichtung vorzuschlagen, mit welcher der Trennvorgang schnell durchgeführt werden kann. Eine weitere Aufgabe der Erfindung ist es, eine Trennvorrichtung vorzuschlagen, mit welcher flüssige und partikelförmige Bestandteile aus einer Flüssigkeit abgetrennt werden können, die bestimmte Partikel enthält. Es soll beispielsweise möglich sein, einen Teil des Blutplasmas und der weißen Blutkörperchen von dem übrigen Blut abzutrennen, wenn weiße Blutkörper und Blutplasma für bestimmte Analysezwecke allein benötigt werden. Weiter soll es beispielsweise möglich sein, im Blut enthaltene zelluläre Bestandteile, Bakterien oder Viren von den übrigen Partikeln im Blut zu trennen oder die an Blutplasma verarmte Flüssigkeit, in der die Partikel in angereicherter Form vorliegen, zu untersuchen.

Die Aufgabe der Erfindung wird durch eine Trennvorrichtung gemäß Anspruch 1 gelöst.

Die in den Dokumenten offenbarten Vorrichtungen offenbaren die im kennzeichnenden Teil des Anspruchs 1 angegebenen Merkmale nicht. Insbesondere weisen die dort offenbarten Vorrichtungen keine offenen Taschen auf. Ferner sind in dem ersten Trennabschnitt und dem zweiten Trennabschnitt keine ersten oder zweiten Durchtrittsöffnungen vorgesehen, die von Mikrostrukturelementen des ersten bzw. zweiten Trennabschnitts begrenzt werden und Abmessungen haben, wie sie bei einer erfindungsgemäßen Vorrichtung vorgesehen sind.

Der Transportweg der erfindungsgemäßen Vorrichtung umfasst neben dem ersten Trennabschnitt zum Zurückhalten der Komplexe und/oder zum Verzögern der Bewegung der Komplexe und/oder von zumindest Teilen der Partikel und dem zweiten Trennabschnitt zum Zurückhalten der Komplexe und/oder von zumindest Teilen der Partikel und/oder zum Verzögern der Bewegung von zumindest Teilen der Partikel einen Resuspensionsabschnitt und einen Inkubationsabschnitt, die in Transportrichtung vor dem ersten Trennabschnitt angeordnet sind. Sowohl der erste Trennabschnitt als auch der zweite Trennabschnitt weisen eine Mikrostruktur mit einem oder mit mehreren Mikrostrukturelementen auf. Der in der erfindungsgemäßen Trennvorrichtung gemäß Anspruch 1 vorgesehene Inkubationsabschnitt dient dazu, der Flüssigkeit zugesetzten Substanzen die Möglichkeit zu geben, zur Bildung der Komplexe beizutragen, bevor die Flüssigkeit den ersten Trennabschnitt erreicht.

In dem Resuspensionsabschnitt des Transportweges ist zumindest eine Substanz zur Herstellung der Komplexe aus den Partikeln und/oder zur Begünstigung der Herstellung der Komplexe aus den Partikeln angeordnet. Damit ist es unnötig, dass die Substanz vor einem Befüllen der Trennvorrichtung der Flüssigkeit hinzugegeben wird. Die Flüssigkeit wird vielmehr unmittelbar in die Trennvorrichtung eingefüllt, und nach Erreichen des Resuspensionsabschnitts nimmt die Flüssigkeit die in dem Resuspensionsabschnitt angeordnete Substanz oder, falls dort mehrere verschiedene Substanzen angeordnet sind, die Substanzen auf.

Das Verhältnis der Oberfläche des Transportweges zum eingeschlossenen Volumen des Transportweges der mikrostrukturierten Trennvorrichtung ist im Gegensatz zu den Untersuchungsgefäßen, die man gewöhnlich in einem normalen Laboratorium antrifft, wesentlich vergrößert. Daraus resultieren u. a. folgende Abweichungen von den Verhältnissen in der Makrowelt.

Oberflächeneffekte, Kapillar- und Adsorptionsphänomene spielen oft eine dominierende Rolle gegenüber Volumeneffekten. In Dimensionen unter 100 µm und Fließgeschwindigkeiten unter 100 cm/sec fließen Flüssigkeiten laminar d. h. als sogenannte Schichtströmung. Es treten keine Turbulenzen auf. Die Flüssigkeiten haben kleine Reynoldszahlen, typischerweise unterhalb Re = 100. Hierdurch ist die Durchmischung von Flüssigkeiten über Turbulenzen nicht gegeben. Andererseits stellt die Diffusion, aufgrund der geringen Abmessungen, einen schnellen und effizienten Mischmechanismus dar.

Der Transportweg ist vorteilhaft so ausgestaltet, dass die Flüssigkeit durch Kapillarkraft bewegt wird.
Daneben können zum Transport von Flüssigkeiten andere Antriebsmechanismen wie die elektroosmotische Kraft (EOF) ausgenutzt. Hierzu ist der Transportweg der Vorrichtung, durch den die Flüssigkeit transportiert werden soll, entsprechend ausgelegt. Dies gilt hinsichtlich seiner Querschnittsflächen,
Querschnittgestaltungen und Oberflächeneigenschaften.

Bei Partikeln im Sinne der Erfindung kann es sich zum Beispiel um Feststoffpartikel aus Materialien wie Glas, Kunststoffe, Harze, oder um Partikel biologischen Ursprungs wie prokaryontische und eukaryontische biologische Zellen, Zellverbände, Zellfragmente, Organellen, Makromoleküle wie Nukleinsäuren, Proteine, etc. oder eine Kombination von Feststoffpartikeln und Partikel biologischen Ursprungs wie z. B. mit Zellen beschichteten Glasträgern handeln.

Komplexe im Sinne der Erfindung sind jede Ansammlung von mehreren miteinander verbundenen Partikeln in der Flüssigkeit. Es kann sich dabei um regelmäßig angeordnete Partikel oder um willkürlich miteinander verbundene Partikel handeln. Die Verbindung kann durch zwischen den Partikeln wirkende Kräfte hergestellt sein. Die Verbindung kann aber auch durch eine zusätzliche Substanz zur Verbindung einzelner Partikel hergestellt sein. Die Partikel eines Komplexes können gleichen oder verschiedenen Types sein.

Die Komplexe können grundsätzlich durch natürlich ablaufende Vorgänge erzeugt werden. Erfindungsgemäß werden sie jedoch gebildet oder ihre Bildung beschleunigt durch das Versetzen der Flüssigkeit mit der Substanz oder mit mehreren Substanzen in dem Resuspensionsbereich.

Die erfindungsgemäße Trennvorrichtung gemäß Anspruch 1 genügt den an sie gestellten Forderungen. Sie ermöglicht insbesondere ein deutlich schnelleres Ablaufen des Abtrennvorganges. Durch den ersten Trennabschnitt werden zunächst Komplexe und/oder z. B. größere Partikel aufgehalten oder ihre Bewegung wird so verzögert, dass die flüssigen Bestandteile und einzelne, nicht in Komplexen gebundene Partikel schnell in die zweite Trennvorrichtung eintreten können, in welcher die verbleibenden Partikel, die nicht im Sammelabschnitt gesammelt werden sollen, aufgehalten oder verzögert werden. In dem Sammelabschnitt sammeln sich letztendlich nur solche flüssigen Bestandteile und gegebenenfalls Teile der Partikel, die von der übrigen Flüssigkeit abgetrennt werden sollen. Da nach einem vollständigen Befüllen des Sammelbereichs keine weiteren flüssigen Bestandteile mit darin enthaltenen anderen Partikeln oder gar Komplexen in den vollständig befüllten Sammelbereich eintreten können, kann so ein schnelles und zuverlässiges Abtrennen erreicht werden. Bei einer erfindungsgemäßen Trennvorrichtung reichen im Gegensatz zu der aus dem Stand der Technik bekannten Trennvorrichtung eine geringe Anzahl von 5 bis 100 Mikrostrukturelementen für einen erfolgreichen Trennvorgang aus.

Die erfindungsgemäße Trennvorrichtung weist in dem Transportweg den Inkubationsabschnitt auf, der in Transportrichtung vor dem ersten Trennabschnitt angeordnet ist. Eine Flüssigkeit, die in dem Resuspensionsabschnitt eine Substanz aufgenommen hat, wird in den Inkubationsabschnitt transportiert, den die Flüssigkeit mit einer solchen Geschwindigkeit durchströmt, dass während der Aufenthaltszeit der Flüssigkeit in dem Inkubationsabschnitt die Substanz die gewünschte Bildung der Komplexe hervorruft oder beschleunigt. Damit kann sichergestellt werden, dass die Komplexe beim Erreichen des ersten Trennabschnitts durch die Flüssigkeit ausgebildet oder überwiegend ausgebildet sind. Durch die Ausgestaltung des Inkubationsabschnitt (Querschnittsfläche, Länge, Oberflächeneigenschaften wie Rauhigkeit und Benetzbarkeit) ist die Strömungsgeschwindigkeit und damit auch die Aufenthaltsdauer der Flüssigkeit im Inkubationsabschnitt reproduzierbar eingestellt.

Die Mikrostrukturelemente des ersten Trennabschnitts weisen in Richtung zum Einlass d. h., entgegen der Transportrichtung offene Taschen auf und/oder die Mikrostrukturelemente schließen zumindest zum Teil mit zu den Mikrostrukturefementen benachbarten Begrenzungsflächen des Transportweges in Richtung zum Einlass offene Taschen ein.

Eine bevorzugte erfindungsgemäße Vorrichtung erlaubt die Auftrennung von Blut in Plasma und Hämatokrit ohne Zugeben von Substanzen unter Ausnutzung der dem Blut innewohnenden Eigenschaften Zellaggregate, d. h. Komplexe, auszubilden. Ein Beispiel für eine unter natürlichen Bedingungen (ohne Zugeben einer Chemikalie) auftretende Komplexbildung, ist die Erythrozyten-Aggregation, insbesondere die Rouleau-Bildung, bei langsam fließendem oder nicht zirkulierendem Blut. Dabei legen sich die etwa acht Tausendstel Millimeter (µm) großen roten Blutkörperchen (Erythrozyten) münzrollenartig, zum Teil verzweigt, mit den flachen Seiten aneinander und bilden lange Ketten. Diese können mit normalen Mikroskopietechniken (Dunkelfeld- oder Phasenkontrastbeleuchtung) ohne großen Aufwand unter einem Lichtmikroskop mit angeschlossener Videokamera gezeigt werden. Die Strukturen der Vorrichtung sind so ausgelegt, dass die Fließgeschwindigkeiten und damit die Scherkräfte so gering sind, dass diese Rouleau-Bildung auftreten kann.

Gemäß der Erfindung kann es sich bei den Mikrostrukturelementen des ersten Trennabschnitts zumindest teilweise um Säulen oder Stelen handeln, die einen kreisförmigen, hexagonalen, quadratischen, rechteckigen oder ovalen Querschnitt haben können. Ferner können die Mikrostrukturelemente zumindest teilweise einen oder mehrere Stege umfassen. Der bzw. die Stege können quer oder schräg zur Transportrichtung angeordnet sein. Die Stege können ferner U-förmig oder V-förmig gebogen bzw. abgewinkelt sein, so dass sie entgegen der Transportrichtung offenen Taschen haben.

Die Mikrostrukturelemente des ersten Trennabschnitts begrenzen einen oder mehrere erste Durchtrittsöffnungen, die geometrische Abmessungen haben, die es einem Teil der Partikel und zumindest kleineren Komplexen sowie den flüssigen Bestandteilen der Flüssigkeit erlauben hindurchzutreten. Die so ausgebildeten ersten Durchtrittsöffnungen ermöglichen zwar das Hindurchtreten des Teils der Partikel und/oder zumindest der kleineren Komplexe, verlangsamen jedoch den Transport der Partikel und/oder Komplexe, da diese vorübergehend an den Mikrostrukturen aufgehalten werden oder zum Teil erst nach einer Deformation, so zum Beispiel bei roten Blutzellen, durch die ersten Durchtrittsöffnungen hindurchtreten können. Flüssige Bestandteile können die ersten Durchtrittsöffnungen ungehindert passieren. Durch eine Kollision mehrerer solcher Komplexe kann es innerhalb einer der ersten Durchtrittsöffnung zur Bildung von größeren Komplexen kommen.

Die Mikrostrukturelemente des ersten Trennabschnitts begrenzen ferner zweite Durchtrittsöffnungen, die geometrische Abmessungen haben, die es nur den Partikeln oder bestimmten Typen von Partikeln sowie den flüssigen Bestandteilen der Flüssigkeit erlauben hindurchzutreten. Durch diese so ausgebildeten zweiten Durchtrittsöffnungen werden Komplexe zurückgehalten, während die Partikel oder die bestimmten Typen von Partikeln verlangsamt oder erst nach einer Deformation, die den Transport dieser Partikel auch verlangsamt, passieren können. Flüssige Bestandteile können diese ersten und/oder zweiten Durchtrittsöffnungen ungehindert passieren. Die zweiten Durchtrittsöffnungen können zum Teil in oder auf den Taschen der Mikrostrukturelemente des ersten Trennabschnitts beginnend vorgesehen sein. Dadurch wird es möglich, dass zwar ein Teil der Komplexe in den Taschen gesammelt und an einem Weitertransport gehindert wird, dass jedoch einzelne Partikel oder ein Teil der Komplexe und die flüssigen Bestandteile durch die zweiten Durchtrittsöffnungen weiter in Transportrichtung strömen können. Gemäß der Erfindung haben die ersten Durchtrittsöffnungen eine Breite und/oder eine Höhe von 1 µm bis 500 µm. Die Durchtrittsfläche der ersten Durchtrittsöffnungen kann in Transportrichtung abnehmen.

Die Breite der zweiten Durchtrittsöffnungen kann gemäß der Erfindung 1 µm bis 500 µm betragen, während die Höhe von 0,1 µm bis 100 µm betragen kann. Die Durchtrittsfläche der zweiten Durchtrittsöffnungen kann ebenso wie die Durchtrittsfläche der ersten Durchtrittsöffnungen in Transportrichtung abnehmen.

Eine Möglichkeit der Anbringung der Substanzen in dem Resuspensionsabschnitt einer erfindungsgemäßen Vorrichtung ist, dass die Substanzen oder die Substanz auf zumindest einer Begrenzungsfläche des Resuspensionsabschnitts eingetrocknet anhaftet. Eine weitere Möglichkeit ist, dass zumindest eine der Substanzen in Form eines Pellets, einer Tablette oder eines Pulvers im Resuspensionsabschnitt angeordnet ist. Ebenso ist es möglich, dass zumindest eine der Substanzen auf einem Träger aufgebracht ist, wobei der Träger im Resuspensionsabschnitt angeordnet ist. Die Substanz oder der Träger können dabei in einer Ausnehmung in einer der Begrenzungsflächen des Resuspensionsabschnitts angebracht sein.

Die Partikel können zumindest zum Teil biologischen Ursprungs, zum Beispiel Zellen oder deren Organellen, Viren oder ähnliches sein. Das Entstehen von Komplexen aus Partikeln wird mittels einer oder mehrerer Substanze, durch eine Aggregation, Agglutination oder Koagulation, etc. erzeugt, begünstigt oder beschleunigt.

Unter Aggregation versteht man in der Hämatologie die reversible Zusammenballung der roten Blutkörperchen durch relative (Flüssigkeitsverlust) oder absolute Zunahme vor allem größerer Eiweißkörperchen des Blutes (Agglomerine, z. B. Fibrinogen, Haptoglobin). Unter Agglutination versteht man die zumeist irreversible Verklebung antigentragender Teilchen (Erythrozyten, Bakterien bzw. bei passiver indirekter Agglutination von Latex-, Polystyrolpartikeln) durch entsprechende Agglutinine wie Antikörper oder Lektine. Die Antigen-Antikörper-Reaktion bewirkt eine Verklumpung partikulärer Antigene. Bei der direkten Agglutination sind die agglutinierenden Antikörper gegen Bakterien- oder zellgebundene Antigene gerichtet, bei der indirekten Agglutination werden lösliche Antigene an einen festen Träger gekoppelt. Die betreffenden Partikel sind meist groß genug, um mikroskopisch sichtbar zu sein.

Zum Ausführen der Erfindung können als agglutinierende Substanzen auch agglutinierende Antikörper verwendet werden, die in der Probe befindliche antigentragende Partikel miteinander zu Komplexen verkleben (agglutinieren). Eine solche Reaktion kann zum Einen als Isolierungsverfahren verwendet werden, um bestimmte Partikel aus einer Partikel enthaltender Lösung zu entfernen, oder zum Anderen als Analysemethode zum Nachweis eines bestimmten Partikels in der Probenlösung. Hierzu kann der Trennabschnitt gleichzeitig als Detektionsbereich genutzt werden. Optisch schwer identifizierbare Partikel werden durch Zusammenlagerung zu Komplexen sichtbar gemacht und in dem Trennbereich angereichert (aufkonzentriert). Sie lassen sich so bequem und einfach über optische Verfahren, wie z. B. Streuungs- oder Trübungsmessungen oder lichtmikroskopische Verfahren, identifizieren.

Diese zu den Substanzen im Sinne der Erfindung zählenden Antikörper können auch auf kugelförmige Träger aufgebracht werden. Diese kugelförmigen Träger sind häufig Polymer- oder Glaspartikel mit einem Durchmesser von 0,05 µm bis 100µm.

Die Mikrostrukturelemente des zweiten Trennabschnitts können eine Treppe, voneinander beabstandete Säulen und/oder eine oder mehrere Stege umfassen, die mit einem Oberteil bzw. Deckel der Vorrichtung einen Spalt ausbilden oder ein oder mehrere Durchtrittsöffnungen schaffen. Grundsätzlich kann der zweite Trennabschnitt so ausgebildet sein, wie es beispielsweise für den Trennbereich einer in der deutschen Patentanmeldung mit dem Aktenzeichen 103 13 201.5/44 offenbarten Trennvorrichtung beschrieben ist.

Eine weitere Ausführung der erfindungsgemäßen Trennvorrichtung kann vor dem ersten Trennabschnitt oder zwischen dem ersten Trennabschnitt und dem zweiten Trennabschnitt einen Verzweigungsabschnitt aufweisen, von dem ausgehend ein zweiter Transportweg von dem ersten Transportweg abzweigt. Der Verzweigungsabschnitt und der von dem Verzweigungsabschnitt beginnende zweite Transportweg ermöglichen es, dass bei einem Verstopfen des ersten oder des zweiten Trennabschnitts durch Bildung eines so genannten "Filterkuchens" die nachströmende Flüssigkeit den ersten oder zweiten Trennabschnitt automatisch spült. Die sich vor dem Eingang oder im Eingangsbereich des ersten oder zweiten Trennabschnitts abgesetzten Partikel oder Komplexe werden durch die kontinuierlich nachströmende Flüssigkeit in den zweiten Transportweg abgeleitet. Dadurch ist erreicht, dass der erste oder zweite Trennabschnitt immer für den Abtrennvorgang freigehalten wird.

Gemäß der Erfindung ist die Länge des ersten Transportweges bis zum zweiten Transportabschnitt so bemessen, dass auf Grund der eingeschränkten Mobilität der Komplexe die flüssigen Bestandteile oder flüssige Bestandteile und Partikel den zweiten Trennabschnitt zuerst erreichen. Vorteilhaft kann der Transportweg bezüglich Länge, Querschnitt, Oberflächenbeschaffenheit und Ausgestaltung der Mikrostrukturelemente so gestaltet sein, dass nur flüssige Bestandteile gegebenenfalls mit bestimmten Partikeln den Sammelbereich erreichen.

Auf Grund der bevorzugt hydrophilen Eigenschaften von zumindest Teilen des Transportweges befüllen die mobileren flüssigen Bestandteile der Probe schneller den Sammelbereich als die Partikel oder Komplexe, die aufgrund ihrer Masse, Volumen und Größe, zum Teil oder vollständig im Trennbereich zurückgehalten werden.

Das erfindungsgemäße Verfahren zum Abtrennen von Teilen einer Flüssigkeit ist in Anspruch 20 angegeben. Das Verfahren zum Abtrennen von Teilen einer Flüssigkeit die flüssige Bestandteile und zumindest einen Typ von Partikeln und/oder zumindest einen Komplex von miteinander verbundenen Partikeln zumindest eines Typs aufweist, weist folgende Schritte auf: Spätestens nach einer Inkubationszeit, während der sich zumindest einzelne Komplexe ausgebildet haben, wird die Flüssigkeit auf einen ersten Trennabschnitt einer Trennvorrichtung, beispielsweise einer erfindungsgemäßen Trennvorrichtung gegeben. In dem ersten Trennabschnitt werden die Komplexe zurückgehalten, und/oder die Bewegung der Komplexe und/oder von bestimmten Typen der Partikel oder aller Partikel wird verzögert.

Die in dem Sammelbereich gesammelten abgetrennten Teile der Flüssigkeit können in dem Sammelabschnitt analysiert werden oder für eine weitere Analyse außerhalb der Trennvorrichtung dem Sammelbereich entnommen werden. Auch können die abgereicherten Partikel und/oder Komplexe in dem Trennabschnitt selbst oder in dem übrigen Teil der Transportwege analysiert werden.

In einem zweiten Trennabschnitt der Trennvorrichtung können die Komplexe und/oder die Partikel zurückgehalten und/oder die Bewegung von bestimmten Typen der Partikel oder von allen Partikeln verzögert werden.

Vor dem Beginn der Inkubationszeit kann zu der Flüssigkeit zumindest eine Substanz zugesetzt werden, die eine Herstellung und/oder eine Begünstigung der Herstellung von Komplexen von miteinander verbundenen Partikeln bewirkt. Die Flüssigkeit kann in einem Inkubationsabschnitt der Trennvorrichtung inkubiert werden. Ferner ist es möglich, dass die Substanz in einem Resuspensionsabschnitt der Trennvorrichtung der Flüssigkeit zugegeben und von der Flüssigkeit resuspendiert wird.

Die Komplexe können zumindest zum Teil durch Agglomeration, Agglutination und/oder Koagulation der Partikel gebildet werden. Die Substanz, welche der Flüssigkeit zugesetzt werden kann, können mit Antikörpern oder Lektinen beschichtete Träger (Teile) enthalten, welche durch eine z. B. Antigen-Antikörper-Reaktion mit Oberflächenantigenen der Partikel die Bildung von Agglutinaten (Komplexen) bewirken.

Die Beweglichkeit der Komplexe und/oder der Partikel kann durch die Mikrostrukturelemente in dem ersten Trennabschnitt zumindest zum Teil eingeschränkt werden, und die Komplexe können zumindest zum Teil durch die Mikrostrukturelemente des ersten Trennabschnitts zurückgehalten werden.

Gemäß der Erfindung können die Komplexe durch die Mikrostrukturelemente der zweiten Trennvorrichtung zurückgehalten und/oder die Partikel zum Teil durch diese Mikrostrukturelemente zurückgehalten werden und/oder die Bewegung zumindest eines Teils der Partikel kann durch diese Mikrostrukturelemente verzögert werden.

Gemäß der Erfindung kann die Flüssigkeit bzw. die abgetrennten Teile der Flüssigkeit durch Kapillarkraft und/oder eine andere in der Größenordnung vergleichbare Kraft transportiert werden.

Gemäß der Erfindung kann die Vorrichtung einen Probenträger umfassen, in welchem der Einlass, der Transportweg und der Sammelabschnitt eingeformt sind, wobei die Vorrichtung ein Oberteil oder einen Deckel umfassen kann, der vorteilhaft den Transportweg und den Sammelabschnitt, d. h. die mikrostrukturierte Seite des Probenträgers mit Ausnahme des Einlasses abgedeckt. Die strukturierte Seite des Probenträgers kann zumindest teilweise hydrophilisiert sein, wenn die Vorrichtung für Proben mit hydrophilen Eigenschaften, z. B. wässrige Proben oder Blut vorgesehen ist.

Die erfindungsgemäßen Verfahren können auch auf andere komplexbildende Flüssigkeiten als Blut angewendet werden. So können bestimmte Partikel in einer Flüssigkeit komplexiert und angereichert (aufkonzentriert) und nachgewiesen werden. Hierzu können auch die in den Trennbereichen angereicherten Komplexe z.B. für Analysezwecke von Interesse sein.

Gemäß der Erfindung können als agglutinierende Substanzen auch agglutinierende Antikörper verwendet werden, die in der Flüssigkeit befindlichen antigentragende Partikel miteinander zu Komplexen verkleben (agglutinieren). Eine solche Reaktion kann zum einen als Isolierungsverfahren verwendet werden um bestimmte Partikel aus einer Partikel enthaltender Lösung zu entfernen, oder zum anderen als Analysemethode zum Nachweis eines bestimmten Partikels in der Probenlösung. Hierzu wird der Trennbereich gleichzeitig auch als Detektionsbereich genutzt. Optisch schwer identifizierbare Partikel werden durch Zusammenlagerung zu Komplexen sichtbar gemacht, in den Trennbereich angereichert (aufkonzentriert) und lassen sich so bequem und einfach über optische Verfahren, identifizieren.

Diese Substanzen können auch auf kugelförmigen Träger aufgebracht werden. Diese kugelförmigen Träger sind häufig Polymer- oder Glaspartikel mit einem Durchmesser von 0,005 µm bis 100 µm.

Ausführungsbeispiele für Trennvorrichtungen sind anhand der Zeichnung näher beschrieben. Darin zeigt
- Fig. 1: eine Draufsicht auf das Unterteil einer ersten n Trennvorrichtung,
- Fig. 2: einen Schnitt entsprechend der Linie II-II in Fig. 1 durch die erste Trennvorrichtung,
- Fig. 3: einen Schnitt durch die erste Trennvorrichtung entsprechend der Linie III-III in Fig. 1,
- Fig. 4: eine Draufsicht auf einen Teil eines Unterteils einer zweiten, erfindungsgemäßen Trennvorrichtung,
- Fig. 5: einen Schnitt durch die zweite Trennvorrichtung entsprechend der Linie V-V in Fig. 4,
- Fig. 6: einen Schnitt durch die zweite Trennvorrichtung entsprechend der Linie VI-VI in Fig. 4,
- Fig. 7: einen Teil einer dritten, erfindungsgemäßen Trennvorrichtung während eines Trennvorganges,
- Fig. 8: verschiedene Beispiele für Mikrostrukturelemente in einem ersten Trennabschnitt einer Trennvorrichtung,
- Fig. 9 bis 11: ein Unterteil eines vierten, fünften bzw. sechsten Ausführungsbeispiels einer Trennvorrichtung in Draufsicht,
- Fig. 12: eine Variante für die Ausgestaltung eines Einlasses einer der Trennvorrichtungen,
- Fig. 13: eine Draufsicht auf das Unterteil eines siebten Ausführungsbeispiels einer Trennvorrichtung,
- Fig. 14: einen Schnitt entsprechend der Linie XIV-XIV durch das siebte Ausführungsbeispiel,
- Fig. 15: einen Schnitt durch das siebte Ausführungsbeispiel gemäß der Linie XV-XV in Fig. 14,
- Fig. 16: eine Draufsicht auf den Probenträger eines achten Ausführungsbeispiels,
- Fig. 17: einen Schnitt durch das achte Ausführungsbeispiels gemäß der Linie XVII-XVII in Fig. 16 und
- Fig. 18: eine Draufsicht auf das Unterteil bzw. den Probenträger einer einfachen Vorrichtung zur Durchführung des Verfahrens.

Die in den Figuren dargestellten Ausführungsbeispiele für Trennvorrichtungen weisen zum Teil gleiche und zum Teil entsprechende Merkmale auf, die mit gleichen Bezugszeichen gekennzeichnet sind.

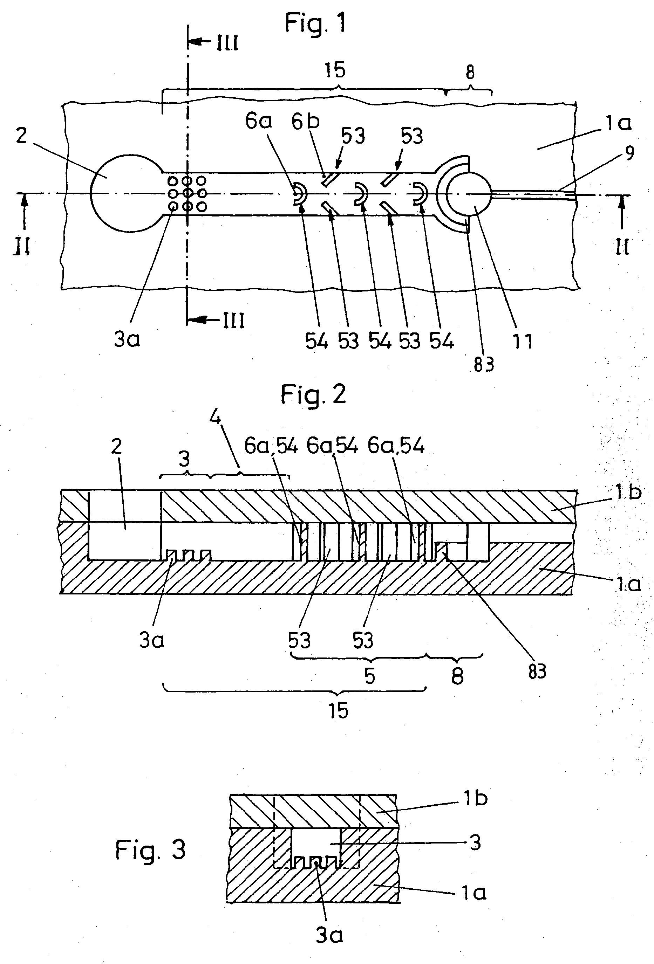

Das in den Figuren 1 bis 3 dargestellte erste Ausführungsbeispiel weist ein Unterteil 1 a auf, in welchem ein Einlass 2 mit kreisförmiger Querschnittsfläche eingeformt ist. Von diesem Einlass 2 zweigt seitlich ein erster Transportweg 15 ab, der sich bis zu einem Sammelabschnitt 11 erstreckt. Der Sammelabschnitt 11 ist über einen Entlüftungskanal 9 mit der Umgebung verbunden. Ein Kapillarstopp in dem Transportkanal 9 kann das Austreten der in dem Sammelabschnitt 11 gesammelten flüssigen Bestandteile verhindern.

Ein solcher Kapillarstopp kann durch sich sprunghaft ändernde geometrische Abmessungen des Transportkanals 9 verwirklicht sein. Ebenso können sich Oberflächeneigenschaften des Transportkanals 9 sprunghaft ändern, beispielsweise von hydrophilen zu hydrophoben Oberflächen.

Der Transportweg 15 zwischen dem Einlass 2 und dem Sammelabschnitt 11 ist in verschiedene Abschnitte unterteilt. In der Transportrichtung der Flüssigkeit, dass heißt in Richtung vom Einlass 2 zum Sammelabschnitt 11, sind hintereinander liegend ein Resuspensionsabschnitt 3, ein Inkubationsabschnitt 4, ein erster Trennabschnitt 5 und ein zweiter Trennabschnitt 8 angeordnet. Sowohl der erste Trennabschnitt 5 als auch der zweite Trennabschnitt 8 weisen dabei eine Mikrostruktur mit Mikrostrukturelementen 53, 54 ersten Trennabschnitt 5 bzw. Mikrostrukturelemente 83 im zweiten Trennabschnitt 8 auf.

Neben dem Unterteil 1 a, bei dem es sich um einen Probenträger handeln kann, weist die in den Figuren 1 bis 3 ausschnittsweise dargestellte erste Trennvorrichtung einen Deckel 1 b auf, der den Transportweg 15, den Sammelabschnitt 11 und den Entlüftungskanal 9 abdeckt und lediglich den Einlass 2 freilässt.

Die in den Figuren 1 bis 3 dargestellte erste Trennvorrichtung ist dazu geeignet, aus Blut Blutplasma zu gewinnen, wobei das Hämatokrit beim Transport entlang des Transportweges 15 in dem ersten Trennabschnitt 5 und dem zweiten Trennabschnitt 8 des Transportwegs 15 verbleibt, so dass sich nur Blutplasma in dem Sammelabschnitt 11 sammelt.

Das Hämatokrit wird von dem Blutplasma unter anderem wegen der beim Transport des Bluts entlang des Transportweges 15 auftretenden Oberflächeneffekte getrennt.

Die Partikel enthaltende Flüssigkeit wird im ersten Trennabschnitt 5 nach dem folgenden Prinzip getrennt: Die Mobilität von Partikeln und Komplexen wird im Vergleich zu der übrigen Flüssigkeit so eingeschränkt, dass sie langsamer durch eine Kapillare transportiert werden als die übrige Bestandteile der Flüssigkeit. Durch die Bildung der Komplexe (was eine Erhöhung der Masse, des Volumens, und der Größe bewirkt) sind die in Komplexen gebundenen Partikel im Volumenstrom nochmals weniger mobil als die ungebundenen Partikel.

Durch die im Trennabschnitt 5 eingebrachten, vorzugsweise quer zur Strömungsrichtung vorliegenden Mikrostrukturelemente 53, 54 wird die Bewegung bzw. die Geschwindigkeit der Komplexe im kontinuierlichen Durchfluss weiter beeinträchtigt. Die Trennung der so in Komplexen gebundenen Partikel von der übrigen Partikel enthaltenen Probenflüssigkeit beruht auf der erwähnten Änderung der Masse, des Volumens, der Ladung und der Größe.

Aufgrund ihrer viskoelastischen Eigenschaften können Erythrozyten auch Spalten oder Kapillaren durchströmen, die kleiner sind als ihr Durchmesser oder ihre Dicke. Der Durchtritt eines Erythrozyten durch kapillare Spalten mit einer Spaltöffnung kleiner als 5 µm ist komplex und erfolgt verzögert durch eine Walzbewegung, die nicht nach Hagen-Poiseuille zu beschreiben ist. Die Spalthöhe zwischen dem Steg 83 des zweiten Trennabschnitts 8 und dem Oberteil der Vorrichtung ist, wenn Plasma aus Blut isoliert werden soll, bevorzugt kleiner als 5 µm, um einzelne ungebundene Blutkörperchen aus der Probenflüssigkeit in dem Trennabschnitt 8 zurückzuhalten. Während der Trennabschnitt 8 für das Plasma kein oder nur ein geringes Hindernis darstellt, werden die roten Blutkörperchen im Trennabschnitt aufgehalten bzw. abgebremst und können diesen nur langsam durchdringen. Hierbei ist die Eindringtiefe der roten Blutkörperchen abhängig von der Höhe des Spalts und der Zeit bis die Sammelkammer 11 vollständig mit Flüssigkeit befüllt ist. Die Länge des Trennabschnitts 8 in Fließrichtung ist so gewählt, dass die Sammelkammer 11 schon komplett mit dem mobileren Plasma befüllt ist, ehe die ersten einzelnen roten Blutkörperchen den Trennabschnitt 8 vollständig überwunden haben.

Die Mikrostrukturelemente 53, 54 formen insbesondere im ersten Trennabschnitt 5 entgegen der Transportrichtung, dass heißt in Richtung des Einlasses 2 offene Taschen 6a, 6b. Die Mikrostrukturelemente 54 sind als in der Draufsicht U-förmige Stege ausgebildet, deren beiden Schenkel in Richtung des Einlasses 2 weisen. Zwischen den U-förmigen Schenkeln wird die Tasche 6a ausgebildet. Die Mikrostrukturelemente 53 des ersten Trennabschnitts 5 sind als schräg in Richtung zum Einlass weisende Stege 53 ausgebildet, welche an der seitlichen Begrenzungsfläche des Transportweges 15 angeschlossen sind. Der zwischen den Stegen 53 und der seitlichen Begrenzungsfläche des Transportweges 15 ausgebildete spitzwinklige Bereich formt die Tasche 6b dieser zweiten Mikrostrukturelemente 53. In den Taschen 6a, 6b der Mikrostrukturelemente 54, 53 sammeln sich Komplexe und Partikel des Bluts (Hämatokrit), deren Transport entlang des Transportweges dadurch unterbunden oder zumindest verzögert wird, während kleinere Partikel des Blutes allenfalls verzögert den ersten Trennabschnitt 5 passieren können. Diese kleineren Partikel werden jedoch in dem zweiten Trennabschnitt 8 zurückgehalten, bei dem ein Steg 83 ein Zurückhalten oder zumindest ein Verzögern der Bewegung der kleineren Partikel des Hämatokrits bewirkt. Größere Partikel die zwar verzögert aber dennoch den ersten Trennabschnitt 5 des Transportweges 15 passieren, werden in jedem Fall von dem Mikrostrukturelement des zweiten Trennabschnitts 8 zurückgehalten.

Der Transportweg 15 vor dem ersten Trennabschnitt umfasst den Inkubationsabschnitt 4. In diesem Abschnitt oder in Inkubationsabschnitten 4 eines der anderen Ausführungsbeispiele für Trennvorrichtungen können Substanzen, die zuvor dem Blut oder einer anderen zu behandelnden Flüssigkeit zugegeben wurden, auf die Flüssigkeit einwirken. Diese Substanzen sind so ausgewählt, dass sie die Bildung von Komplexen aus in der Flüssigkeit enthaltenen Partikel, zum Beispiel die Bildung von Komplexen aus roten Blutzellen hervorrufen oder zumindest beschleunigen. Insbesondere bei Blut können diese Komplexe durch Aggregation, Agglutination oder Koagulation von roten und/oder weißen Blutzellen oder anderen im Blut enthaltenen Zellen oder Viren erzeugt werden.

Die Substanzen oder die Substanz, welche die Bildung der Komplexe hervorruft oder begünstigt, wird in einem Resuspensionsbereich 3 der ersten Trennvorrichtung aufgenommen. Während die Flüssigkeit den Inkubationsabschnitt 4 in Transportrichtung durchströmt, wirkt die Substanz auf die Flüssigkeit ein, so dass die Komplexe ausgebildet werden oder im Wesentlichen ausgebildet sind, wenn die Flüssigkeit den ersten Trennabschnitt 5 erreicht. Die Komplexe der Partikel bzw. Blutzellen werden durch die Mikrostrukturelemente 53, 54 zum Teil aufgehalten und zum Teil verlangsamt. Die Komplexe, die aufgehalten werden, werden z. B. in den Taschen 6a, 6b der Mikrostrukturelemente gesammelt. Vorzugsweise entspricht das Gesamtvolumen aller Taschen dem Volumen der in der Flüssigkeit enthaltenen Partikel, dass heißt des Hämatokrits. Am Ende des ersten Trennabschnitts 5 gelangt eine Flüssigkeit an, die im Wesentlichen nur noch einzelne Partikel bzw. Blutzellen enthält, die nicht in Komplexen gebunden sind. Diese letzten Partikel bzw. Blutzellen werden im zweiten Trennabschnitt 8 durch den dort angeordneten Steg 83 aufgehalten oder verlangsamt, so dass im Sammelabschnitt ausschließlich Blutplasma ohne zelluläre Bestandteile oder ähnlichem anlangt, bis der Sammelabschnitt vollständig befüllt ist.

Die im Resuspensionsabschnitt 3 angeordnete Substanz 3a kann in Tablettenform auf der unteren Begrenzungsfläche des Transportweges 15 bzw. des Resuspensionsabschnitts 3 angebracht sein.

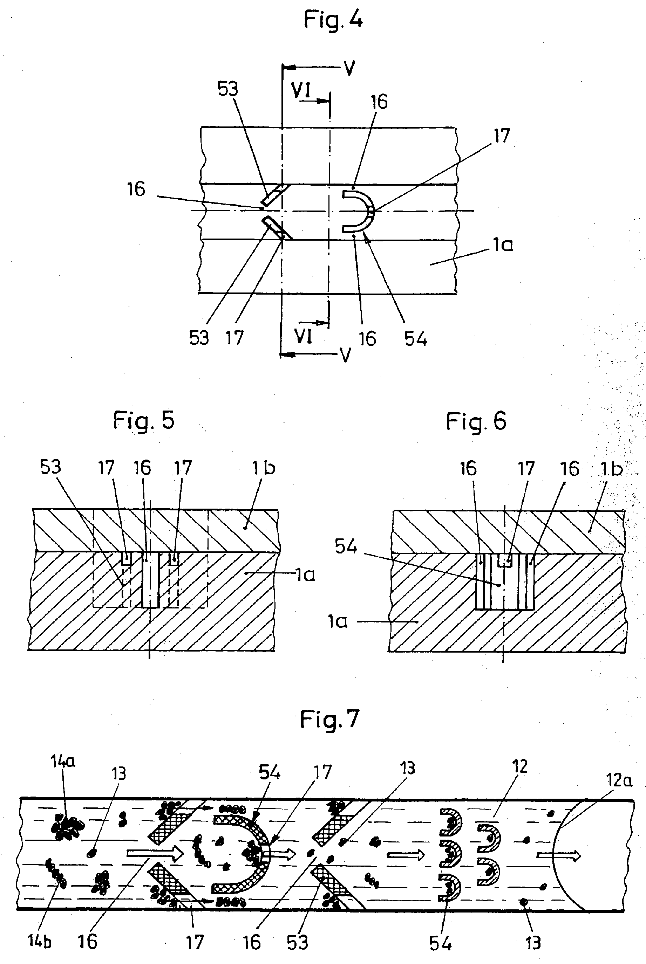

Der in Fig. 4, 5 und 6 dargestellte Ausschnitt aus einem ersten Trennabschnitt einer zweiten Trennvorrichtung zeigt einen U-förmigen Steg 54 und schräg zur Transportrichtung angeordnete Stege 53 als Mikrostrukturelemente, die den in dem ersten Trennabschnitt 5 des ersten Ausführungsbeispiels für eine Trennvorrichtung gemäß der Figuren 1 bis 3 ähnlich sind. Zwischen zwei einander gegenüberliegenden Stegen 53, zwischen einem Steg 54 und der seitlichen Begrenzungsfläche des Transportweges 15 sowie zwischen zwei benachbarten Stegen 53, 53 oder 54, 54 oder 53, 54 befinden sich die ersten Durchtrittsöffnungen 16. Die Stege 53, 54 gemäß Fig. 4 bis 6 unterscheiden sich von den entsprechenden Stegen 53, 54 gemäß der Figuren 1 bis 3 dadurch, dass die Stege im Bereich der Taschen 6a, 6b mit zweiten Durchtrittsöffnungen 17 versehen sind. Die zweiten Durchtrittsöffnungen 17 haben geometrische Abmessungen, die es nur den im Blut enthaltenen zumindest einzelnen kleineren Partikeln und/oder dem Blutplasma erlauben hindurchzutreten, während Komplexe aus den Partikeln zurückgehalten werden. Die zweiten Durchtrittsöffnungen 17 sind kleiner als die ersten Durchtrittsöffnungen 16. Die ersten Durchtrittsöffnungen 16 erlauben sowohl Komplexen aus Partikeln als auch einzelnen Partikeln sowie dem Blutplasma das Hindurchtreten. Durch die zweiten Durchtrittsöffnungen 17 entweicht die Luft aus den Taschen in Richtung Sammelkammer 11, während Flüssigkeit und Partikel oder Komplexe aus Partikeln in die Taschen eintreten.

In Fig. 7 ist dargestellt, wie Blutplasma in der dritten Trennvorrichtung mit Hilfe des Verfahrens aus Blut gewonnen werden kann. Dazu ist in Fig. 7 ein Teil des Transportweges 15, nämlich der Inkubationsabschnitt 4 und der erste Trennabschnitt 5 dargestellt. Ferner ist das Blutplasma 12 mit einer Flüssigkeitsfront 12a dargestellt, wobei in dem Blutplasma einzelne Zellen 13, Zellhaufen 14a oder sogenannte Roulaus 14b aus Blutzellen schwimmen. Die Zellhaufen 14a und Roulaus 14b bilden sich im Inkubationsabschnitt unter Einfluss von im nicht dargestellten Resuspensionsabschnitt zugeführten Substanzen aus. Durch die entlang des Transportweges wirkende Kapillarkraft wird das Blut aus dem Inkubationsabschnitt 4 in den ersten Trennabschnitt 5 transportiert. Dabei sammeln sich Zellhaufen 14a, Roulaus 14b oder einzelne Zellen 13 in den Taschen 6a und 6b der Mikrostrukturelemente 53 und 54. Durch die zweiten Durchtrittsöffnungen 17 kann das ebenfalls in die Taschen 6a, 6b fließende Blutplasma 12 aus den Taschen in Transportrichtung wieder heraustreten. Die ersten Durchtrittsöffnungen 16 zwischen zwei benachbarten Mikrostrukturelementen 53 und 54 sowie zwischen den Mikrostrukturelementen 54 und den seitlichen Begrenzungsflächen des Transportweges 15 erlauben sowohl ein Hindurchtreten einzelner Zellen 13 als auch das Hindurchtreten von Komplexen, wie zum Beispiel den Zellhaufen 14a oder den Roulaus 14b. Durch das vollständige oder vorübergehende Zurückhalten der durch Zellaggregate gebildeten Komplexe oder einzelner Zellen bildet sich in der vorderen Fließfront des Bluts ein Bereich aus, der im Wesentlichen Blutplasma und nur noch vereinzelt Zellen enthält.

Diese Mischung aus Blutplasma 12 und einzelnen Zellen 13 wird durch die Transportkräfte aus dem ersten Trennabschnitt 5 in den nicht mehr dargestellten zweiten Trennabschnitt 8 transportiert.

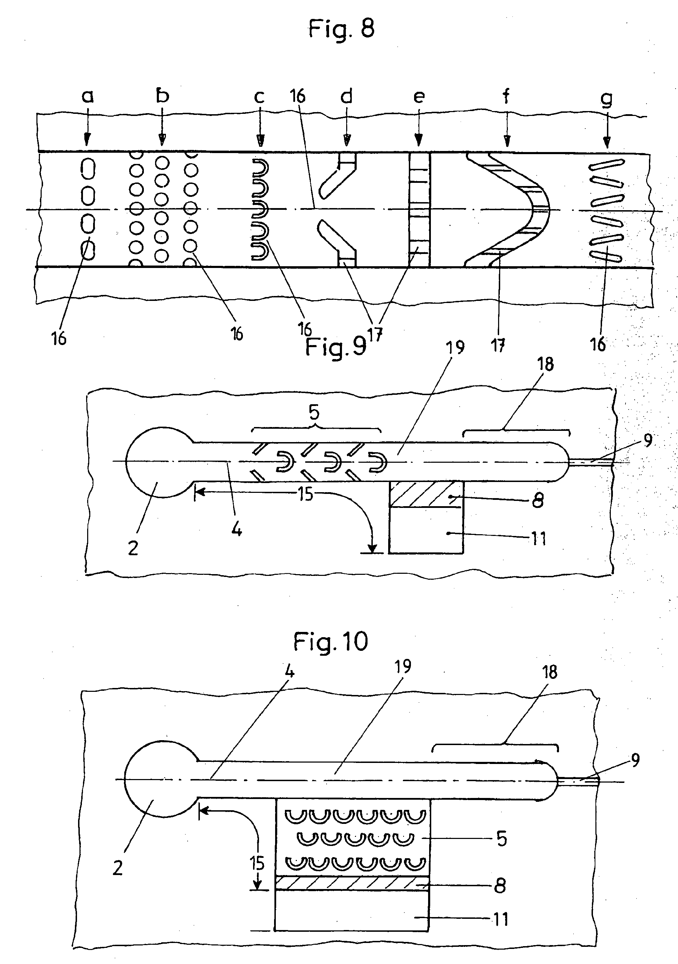

Die in Fig. 8 dargestellten Varianten für Mikrostrukturelemente im ersten Trennabschnitt können allein oder in verschiedensten Kombinationen in einem ersten Trennbereich angeordnet sein. Bei den Mikrostrukturelementen a handelt es sich um Stege oder Säulen mit im Wesentlichen ovalen Querschnitt, die sich von einer unteren Begrenzungsfläche des ersten Trennabschnitts 5 bis zu dem Oberteil einer Trennvorrichtung erstrecken. Die Mikrostrukturelemente b sind Säulen, die in drei Reihen hintereinander gestaffelt stehen. Zwischen zwei benachbarten Mikrostrukturelementen a oder zwischen zwei benachbarten Mikrostrukturelementen b befinden sich erste Durchtrittsöffnungen 16. Die Mikrostrukturelemente c sind hufeisenförmig ausgebildete Stege, die jeweils erste Durchtrittsöffnungen 16 mit benachbarten hufeisenförmigen Stegen oder mit einer seitlichen Begrenzungsfläche des ersten Trennabschnitts 5 begrenzen. Die Stege können sich von der unteren Begrenzungsfläche bis zum Oberteil 1 b einer Trennvorrichtung erstrecken, oder zwischen der Oberseite der hufeisenförmigen Stege und dem Oberteil 1 b kann ein Spalt verbleiben. Letzteres gilt auch für die Mikrostrukturelemente a und b sowie die Mikrostrukturelemente d, bei den es sich um abgewinkelte Stege handelt, die sich entgegen der Transportrichtung in dem ersten Trennabschnitt erstrecken. Zwischen den Enden zwei benachbarter abgewinkelter Stege befindet sich eine erste Durchtrittsöffnung 16.

Bei dem Mikrostrukturelement e handelt es sich um einen Steg, der sich über die gesamte Breite des Transportweges 15 von einer ersten seitlichen Begrenzungsfläche zu einer zweiten seitlichen Begrenzungsfläche erstreckt. In diesem Steg sind zweite Durchtrittsöffnungen 17 enthalten. Eine Variante zu dem Mikrostrukturelement e bildet das Mikrostrukturelement f, bei dem es sich um einen einzelnen hufeisenförmigen Steg handelt, der wie der Steg f zweite Durchtrittsöffnungen 17 enthält und sich von einer ersten seitlichen Begrenzungsfläche zur zweiten seitlichen Begrenzungsfläche des Transportweges erstreckt. Bei den Mikrostrukturelementen g handelt es sich um Stege, die in einem spitzen Winkel zur Transportrichtung angeordnet sind, um die Komplexe aufzuhalten und/oder zu verlangsamen sowie einzelne Partikel zu verlangsamen, jedoch flüssige Bestandteile möglichst ungestört passieren zu lassen.

Das vierte Ausführungsbeispiel einer Trennvorrichtung gemäß Fig. 9 weist neben dem Einlass 2 und dem Sammelabschnitt 11 einen Transportweg 15 auf, der einen Inkubationsabschnitt 4, einen ersten Trennabschnitt 5, einen zweiten Trennabschnitt 8 und zwischen dem ersten Trennabschnitt 5 und dem zweiten Trennabschnitt 8 einen Verzweigungsabschnitt 19 aufweist. Der Transportweg 15 knickt ab dem Verzweigungsabschnitt 19 in einem rechten Winkel ab, während sich an den Verzweigungsabschnitt 19 ein zweiter Transportweg 18 anschließt, welcher in einer Linie mit dem Inkubationsabschnitt 4 und dem ersten Trennabschnitt 5 liegt. Von diesem zweiten Transportweg 18 führt ein Entlüftungskanal 9 nach außen.

Im Unterschied zu den vorherigen Beispielen ist während des gesamten Trennvorgangs ein Volumenstrom vom Verzweigungspunkt in Richtung zum zweiten Transportweg 18 und zum zweiten Trennabschnitt 8 hin vorhanden. Die zu filtrierende Flüssigkeit fließt parallel zum zweiten Trennabschnitt 8. Ein Teil der Flüssigkeit wird entsprechend quer in Richtung zum Sammelabschnitt 11 abgezogen. Aufgrund der kontinuierlichen Strömung der zu trennenden Flüssigkeit an dem Verzweigungsabschnitt 19 werden Partikel mit dem Volumenstrom in den zweiten Transportweg 18 fortgespült, und die Belegung der Oberfläche des zweiten Trennabschnitts 8 wird verringert. Der Belegungsgrad lässt sich in Abhängigkeit vom Volumenstrom entsprechend variieren. Der Volumenstrom ist jedoch immer laminar mit Reynolds-Zahlen kleiner als 100. In Ausführungsbeispielen, bei denen die Flüssigkeit ausschließlich durch Kapillarkraft getrieben wird, lässt sich der Volumenstrom über die Kanaldimensionen und Oberflächeneigenschaften entsprechend einstellen.

Die fünfte Trennvorrichtung, die dem vierten Ausführungsbeispiel gemäß Fig. 9 sehr ähnlich ist, ist in Fig. 10 dargestellt. Bei dem fünften Ausführungsbeispiel gemäß Fig. 10 ist jedoch anders als bei dem vierten Ausführungsbeispiel gemäß Fig. 9 der Verzweigungsabschnitt 19 vor dem ersten Trennabschnitt angeordnet. Sowohl der erste Trennabschnitt 5 als auch der zweite Trennabschnitt 8 sind parallel zum Verzweigungsabschnitt 19 und parallel zur Transportrichtung der Flüssigkeit vom Verzweigungsabschnitt 19 zum zweiten Transportweg 18 angeordnet. Der zweite Transportweg 18 ist in linearer Verlängerung zum Inkubationsabschnitt 4 angeordnet. Durch die Anordnung des ersten Trennabschnitts 5 parallel zum Verzweigungsabschnitt 19 wird der Eingangsbereich des ersten Trennabschnitts 5 automatisch gespült. Der Eingangsbereich des ersten Trennabschnitts 5 wird nicht durch einen dort gebildeten "Filterkuchen" verstopft. Ein ständiger Volumenstrom in dem ersten Transportweg 15 und dem zweiten Transportweg 18 bis zum Abschluss der Befüllung des Sammelabschnitts 11 wird erreicht.

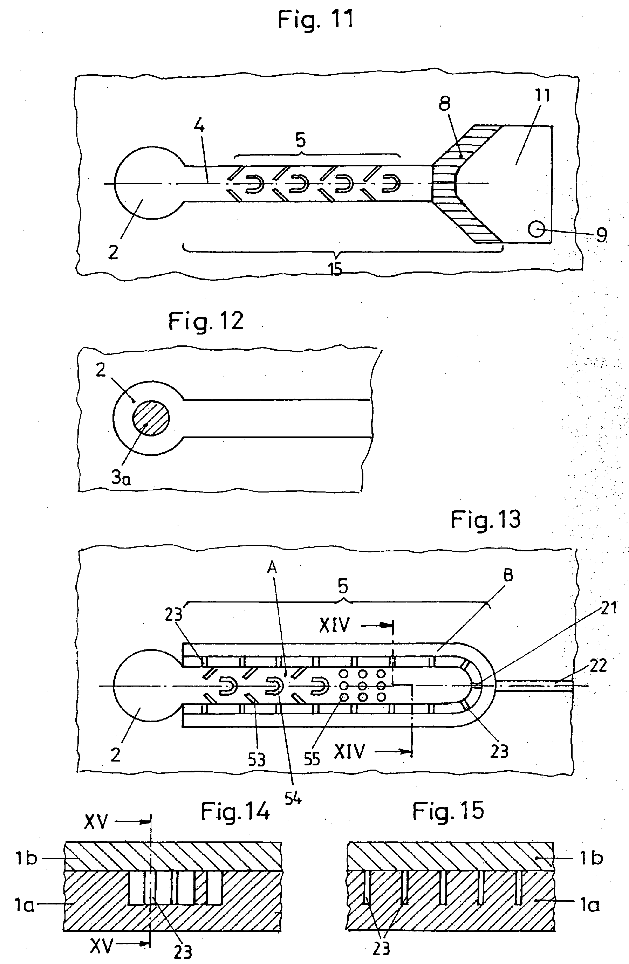

Das sechste Ausführungsbeispiel einer Trennvorrichtung gemäß Fig. 11 ähnelt dem Ausführungsbeispiel gemäß Fig. 1, wobei im Unterschied zu dem ersten Ausführungsbeispiel gemäß Fig. 1 kein Resuspensionsabschnitt 3 im Transportweg 15 vorgesehen ist. Als Mikrostrukturelement des zweiten Trennabschnitts 8 ist ein Steg (wie z. B. das Mikrostrukturelement e oder f in Fig. 8) mit senkrecht zu der unteren Begrenzungsfläche stehenden Schlitzen vorgesehen. Hinter diesem zweiten Trennabschnitt 8 sammeln sich die flüssigen Bestandteile der Flüssigkeit in einem Sammelabschnitt 11. Von dem Sammelabschnitt 11 ist ein Entlüftungskanal 9 durch eine untere Begrenzungsfläche des Sammelabschnitts 11 hindurchgeführt.

In Fig. 12 ist ein Ausschnitt aus einer Trennvorrichtung dargestellt. Im Einlass 2 ist der Resuspensionsabschnitt 3a als kreisförmige Fläche auf der unteren Begrenzungsfläche des Einlasses 2 vorgesehen. Die in den Einlass 2 gefüllte Flüssigkeit trifft unmittelbar auf die Substanz des Resuspensionsabschnittes 3a, durch die chemische oder biochemische Reaktionen zwischen der Substanz und den Partikeln in der Flüssigkeit ausgelöst oder beschleunigt werden, um aus den Partikeln Komplexe mit gleichartigen oder verschiedenen Partikeln zu erzeugen.

Das in Fig. 13, 14 und 15 dargestellte siebte Ausführungsbeispiel einer Trennvorrichtung weist ebenfalls einen Einlass 2, einen Transportweg 15 und einen Sammelabschnitt auf, wobei der zweite Trennabschnitt und der Sammelabschnitt nicht dargestellt sind. Es sind in der Fig. 13 lediglich der Einlass und der erste Trennabschnitt 5 dargestellt. Dieser erste Trennabschnitt 5 weist einen in Draufsicht U-förmigen Steg auf, der sich von der unteren Begrenzungsfläche des ersten Trennabschnitts 5 bis zu dem Oberteil 1 b der Trennvorrichtung erstreckt. Dieser Steg trennt zwei strömungstechnisch gesehen in Strömungsrichtung hintereinander liegende Bereiche der Trennvorrichtung voneinander ab. Ein erster Bereich A ist zwischen den Schenkeln des Steges angeordnet und mit dem Einlass 2 unmittelbar verbunden. Der zweite Bereich B wird durch einen Sammelkanal gebildet, der den in Draufsicht u-förmigen Steg auf der Außenseite umgibt und über einen Transportkanal 22 mit dem nicht dargestellten zweiten Trennabschnitt verbunden ist. In dem ersten Bereich des ersten Trennabschnitts 5 sind Mikrostrukturelemente wie zum Beispiel schräg zur Transportrichtung angeordnete Stege 53, u-förmige Stege 54 oder Säulen 55 angeordnet, die auf die bereits beschriebene Art und Weise den Transport von Komplexen verhindern oder verlangsamen und den Transport einzelner Partikel verlangsamen. Am in Strömungsrichtung liegenden Ende des ersten Bereiches A weist der U-förmige Steg in seinem Bogen eine Durchtrittsöffnung 21 auf. Der Bogen und die Schenkel des U-förmigen Steges sind in regelmäßigen Abständen von der unteren Begrenzungsfläche des ersten Trennabschnitts 5 zu dem Oberteil 1 b der Trennvorrichtung geschlitzt. Die Breite der Schlitze 23 ist dabei so bemessen, dass einzelne Partikel und flüssige Bestandteile der Flüssigkeit hindurchtreten können. Die Schlitze 23 bilden zweite Durchtrittsöffnungen im Sinne der Erfindung.

Die in Fig. 13 bis 15 dargestellte Trennvorrichtung funktioniert folgendermaßen. Die Flüssigkeit wird in den Einlass 2 gegeben, von wo aus sie durch Kapillarkraft vom Anfang bis zum Ende des ersten Bereichs A des ersten Trennabschnitts 5 transportiert wird. Dabei werden einzelne Komplexe und/oder Partikel von den Mikrostrukturelementen 53, 54, 55 im ersten Bereich A aufgehalten oder verlangsamt. Die flüssigen Bestandteile und einzelne Partikel treten in die Schlitze 23 in dem U-förmigen Steg ein. Da der Übergang von den Schlitzen 23 zu dem zweiten Bereich B des Trennabschnitts 5 für die flüssigen Bestandteile einen Kapillarstopp darstellt, wird die Flüssigkeit über die Schlitze 23 zunächst nicht in den zweiten Bereich B transportiert. Die in dem Bogen vorgesehene Durchtrittsöffnung 21 ist nicht als Kapillarstopp ausgelegt, und die in diese Durchtrittsöffnung 21 eintretende Flüssigkeit kann ungehindert in den zweiten Bereich B eintreten. Dieses kann beispielsweise durch Kerben oder ähnliches erreicht werden. Sobald die flüssigen Bestandteile den ersten Bereich A vollständig befüllt haben und die Durchtrittsöffnung 21 im Bogen des U-förmigen Steges benetzt ist, tritt Flüssigkeit durch die Durchtrittsöffnung 21 in den zweiten Bereich B ein und befüllt diesen. Die Flüssigkeit benetzt dabei die Außenseite des U-förmigen Steges und die Schlitze 23, wodurch der Kapillarstopp auf der Außenseite des U-förmigen Steges aufgehoben wird. Die in den Schlitzen 23 anstehende Flüssigkeit kann aus den Schlitzen 23 austreten, und ein Transport der Flüssigkeit und der in ihr enthaltenen einzelnen Partikel aus dem ersten Bereich A in den zweiten Bereich B des ersten Trennabschnitts 5 beginnt. In dem zweiten Bereich B sammeln sich flüssige Bestandteile der Flüssigkeit mit einzelnen Partikel. Auf Grund der in dem zweiten Bereich B und dem Transportkanal 22 wirkenden Kapillarkraft wird diese Mischung aus flüssigen Bestandteilen und einzelnen Partikeln zu einem zweiten Trennabschnitt transportiert, in dem die einzelnen Partikel auf die zuvor schon mehrfach beschriebene Art und Weise aus der Flüssigkeit entfernt werden.

In einer alternativen Ausführung zu der Trennvorrichtung gemäß der Figuren 13 bis 15 kann der U-förmige Steg mit seinen Mikrostrukturelementen (Schlitzen) so ausgestaltet sein, dass dieser U-förmige Steg bereits den zweiten Trennabschnitt der Trennvorrichtung bildet, und dass der zweite Bereich außerhalb des U-förmigen Steges als Sammelabschnitt der Trennvorrichtung dient.

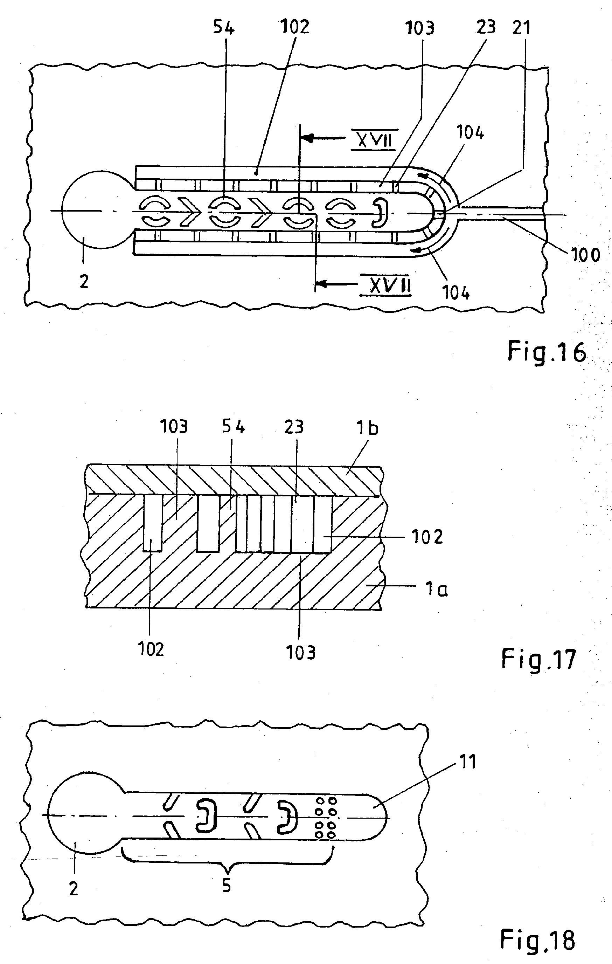

Die in den Figuren 16 und 17 dargestellte Vorrichtung ist ähnlich wie die in den Figuren 13 bis 15 dargestellte Vorrichtung ausgebildet. Der erste Trennabschnitt ist vollständig durch einen Steg 103 umschlossen und umfasst auch diesen Steg 103. Der Steg 103 ist durch eine Vielzahl von Schlitzen 12 durchbrochen, die den ersten Trennabschnitt mit einem parallel zum ersten Trennabschnitt angeordneten als Sammelbereich ausgebildeten Kanal 102 verbinden. Hierbei haben die Schlitze 23 bevorzugt dieselbe Tiefe wie der Sammelkanal 102. Die Schlitze bilden einen Kapillarstop für die Flüssigkeit in Transportrichtung vom ersten Trennabschnitt in Richtung Sammelkanal 102. Die Schlitze 23 haben eine Tiefe von 1 µm bis 100 µm, eine Breite von 1 mm bis 500 µm und eine Länge von mindestens 50 µm. Die Durchtrittsöffnung 21 hat dieselbe Tiefe wie der Sammelkanal 102 und stellt für die ankommende Flüssigkeit keinen Kapillarstop dar.

Nach Zugabe der Partikel enthaltenden Flüssigkeit in den Einfüllbereich wird durch Kapillarkraft der Trennabschnitt vollständig befüllt. Partikel und Komplexe werden hierbei teilweise von den Mikrostrukturelementen 53 und 54 zurückgehalten. Sobald die Flüssigkeit die Durchtrittsöffnung 21 befüllt hat, fließt die Flüssigkeit in den Sammelkanal 102 und befüllt diesen in Richtung der Einlassöffnung (siehe Pfeil 104). Der Querschnitt des Sammelkanals 102 ist kleiner als der Querschnitt des Sammelkanals 100, wodurch die über die Durchtrittsöffnung 21 eintretende Flüssigkeit bevorzugt erst den Sammelbereich 102 befüllt und dann erst über den Sammelkanal 100 weiterfließt. Während des Befüllvorgangs des Sammelbereichs 102 werden die einzelnen Schlitze 23 benetzt, wodurch deren Kapillarstoppfunktion aufgehoben wird, so dass die innerhalb des Steges 103 vorliegende zunächst praktisch ruhende Flüssigkeit, über die einzelnen Schlitze 23 in Richtung Sammelkanal 100 strömen kann. Hierbei werden Partikel oder Komplexe in den jetzt in Strömungsrichtung liegenden Mikrostrukturen 54 und durch die Schlitze 23 zum Teil zurückgehalten, so dass eine im Wesentlichen partikelarme Lösung über den Sammelbereich 102 in Richtung Sammelkanal 100 strömt, der zum zweiten Trennabschnitt (nicht dargestellt) führt.

Der in Fig. 18 dargestellte Probenträger ist, wie auch die übrigen in den vorherigen Figuren dargestellten Vorrichtungen, für die Durchführung eines Verfahrens geeignet. Der Probenträger weist dazu neben dem Einlass 2 lediglich den ersten Trennbereich 5 mit Mikrostrukturelementen und den Sammelbereich 11 auf.

## Patentansprüche

1. Mikrostrukturierte Trennvorrichtung zum Abtrennen von Teilen einer Flüssigkeit, die flüssige Bestandteile und zumindest einen Typ von Partikeln und/oder zumindest einen Komplex von miteinander verbundenen Partikeln zumindest eines Typs aufweist, mit folgenden Merkmalen:
- die Vorrichtung umfasst einen Einlass (2) für die Flüssigkeit, einen Sammelabschnitt (11) und einen Transportweg (15) von dem Einlass (2) zu dem Sammelabschnitt (11);
- der Transportweg (15) umfasst in Transportrichtung hintereinanderliegend einen ersten Trennabschnitt (5) zum Zurückhalten zumindest eines Teils der Komplexe und/oder zum Verzögern der Bewegung zumindest eines Teils der Komplexe und/oder zumindest eines.Teils der Partikel und einen zweiten Trennabschnitt (8) zum Zurückhalten zumindest eines Teils der Komplexe und/oder zumindest eines Teils der Partikel und/oder zum Verzögern der Bewegung der Partikel;
- sowohl der erste Trennabschnitt (5) als auch der zweite Trennabschnitt (8) weisen eine Mikrostruktur mit einem oder mehreren Mikrostrukturelementen auf
- der Transportweg (15) umfasst ferner einen Resuspensiosnabschnitt (3) und einen Inkubationsabschnitt (4),
- in dem Resuspensionsabschnitt ist mindestens eine Substanz zur Herstellung der Komplexe aus Partikel und/oder zur Begünstigung der Herstellung der Komplexe aus den Partikeln angeordnet,
- der Inkubationsabschnitt ist dazu geeignet und eingerichtet, der mindestens einen, im Resuspensionsabschnitt aufgenommenen Substanz die Möglichkeit zu geben, zur Bildung der Komplexe beizutragen, bevor die Flüssigkeit den ersten Trennabschnitt erreicht, und
- über die Ausgestaltung des Inkubationsabschnitts, insbesondere der Querschnittsfläche, der Länge, der Ausformung und/oder der Oberflächeneigenschaften des Inkubationsabschnitts, ist die Strömungsgeschwindigkeit und die Aufenthaltsdauer der Flüssigkeit im Inkubationsabschnitt reproduzierbar eingestellt,
**dadurch gekennzeichnet, dass**
- die Mikrostrukturelemente des ersten Trennabschnitts (5) in Richtung zum Einlass (2) offene Taschen (6a) aufweisen und/oder die Mikrostrukturelemente zumindest zum Teil mit zu den Mikrostrukturelementen benachbarten Begrenzungsflächen des Transportwegs in Richtung zum Einlass (2) offene Taschen (6b) einschließen,
- die Mikrostrukturelemente des ersten Trennabschnitts (5) eine oder mehrere erste Durchtrittsöffnungen (16) begrenzen, die geometrische Abmessungen haben, die es den Partikeln und den Komplexen erlauben hindurchzutreten,
- die Mikrostrukturelemente des zweiten Trennabschnitts (8) eine oder mehrere erste Durchtrittsöffnungen (16) begrenzen, die geometrische Abmessungen haben, die es den Partikeln und den Komplexen erlauben hindurchzutreten, und
- die Mikrostrukturelemente des ersten Trennabschnitts (5) zweite Durchtrittsöffnungen (17) begrenzen, die geometrische Abmessungen haben, die es nur den Partikeln oder bestimmten Partikeltypen erlauben hindurchzutreten,
- wobei die Breite der ersten Durchtrittsöffnungen (16) und/oder zweiten Durchtrittsöffnungen (17) von 1 µm bis 500 µm beträgt.

2. Trennvorrichtung nach Anspruch 1, **dadurch gekennzeichnet, dass** die Mikrostrukturelemente des ersten Trennabschnitts (5) Säulen oder Stelen umfassen.

3. Trennvorrichtung nach Anspruch 2, **dadurch gekennzeichnet, dass** die Säulen einen rechteckigen oder ovalen Querschnitt haben.

4. Trennvorrichtung nach einem der Ansprüche 1 bis 3, **dadurch gekennzeichnet, dass** die Mikrostrukturelemente des ersten Trennabschnitts zumindest einen Steg (53) umfassen.

5. Trennvorrichtung nach Anspruch 4, **dadurch gekennzeichnet, dass** die Stege (53) quer oder schräg zur Transportrichtung angeordnet sind.

6. Trennvorrichtung nach einem der Ansprüche 1 bis 5, **dadurch gekennzeichnet, dass** die zweiten Durchtrittsöffnungen (17) zum Teil in den Taschen (6a, 6b) der Mikrostrukturelemente des ersten Trennabschnitts (5) vorgesehen sind.

7. Trennvorrichtung nach einem der Ansprüche 1 bis 6, **dadurch gekennzeichnet, dass** die ersten Durchtrittsöffnungen (16) eine Höhe von 1 µm bis 500 µm haben.

8. Trennvorrichtung nach einem der Ansprüche 1 bis 7, **dadurch gekennzeichnet, dass** die Durchtrittsfläche der ersten Durchtrittsöffnungen (16) in Transportrichtung abnimmt.

9. Trennvorrichtung nach einem der Ansprüche 1 bis 8, **dadurch gekennzeichnet, dass** die zweiten Durchtrittsöffnungen (17) eine Höhe von 0,1 µm bis 10 µm haben.

10. Trennvorrichtung nach einem der Ansprüche 1 bis 9, **dadurch gekennzeichnet, dass** die Durchtrittsfläche der zweiten Durchtrittsöffnungen (16) in Transportrichtung abnimmt.

11. Trennvorrichtung nach Anspruch 10, **dadurch gekennzeichnet, dass** die zumindest eine Substanz auf zumindest einer Begrenzungsfläche des Resuspensionsabschnitts (3) eingetrocknet anhaftet.

12. Trennvorrichtung nach Anspruch 10 oder 11, **dadurch gekennzeichnet, dass** zumindest eine der Substanzen in Form eines Pellets, einer Tablette oder eines Pulvers im Resuspensionsabschnitt (3) angeordnet ist.

13. Trennvorrichtung nach einem der Ansprüche 10 bis 12, **dadurch gekennzeichnet, dass** zumindest eine der Substanzen auf einem Träger aufgebracht ist oder das der Träger in der Substanz getränkt ist, wobei der Träger im Resuspensionsabschnitt (3) angeordnet ist.

14. Trennvorrichtung nach einem der Ansprüche 1 bis 13, **dadurch gekennzeichnet, dass** die Partikel zumindest zum Teil Partikel biologischen Ursprungs, zum Beispiel Zellen oder deren Organellen, Viren oder ähnliches sind, dass die Substanz oder eine der Substanzen eine Aggregation, Agglomeration, Agglutination und/oder Koagulation der lebenden Partikel verursacht, begünstigt oder beschleunigt, dass die Substanz oder eine der Substanzen zumindest zum Teil an einer Antigenfraktion auf der Oberfläche der Zelle bindet und dass die Subtanz einen mit Antikörpern oder Lektinen beschichteten Träger enthält.

15. Trennvorrichtung nach einem der Ansprüche 1 bis 14, **dadurch gekennzeichnet, dass** die Substanz oder der Träger in einer Ausnehmung in einer der Begrenzungsflächen des Resuspensionsabschnitt (3) angebracht ist.

16. Trennvorrichtung nach einem der Ansprüche 1 bis 15, **dadurch gekennzeichnet, dass** die Mikrostrukturelemente des zweiten Trennabschnitts (8) eine Treppe umfassen.

17. Trennvorrichtung nach einem der Ansprüche 1 bis 16, **dadurch gekennzeichnet, dass** die Mikrostrukturelemente des zweiten Trennabschnitts (8) voneinander beabstandete Säulen umfassen.

18. Trennvorrichtung nach einem der Ansprüche 1 bis 17, **dadurch gekennzeichnet, dass** die Mikrostrukturelemente des zweiten Trennabschnitts (8) einen oder mehrere Stege (83) umfassen.

19. Trennvorrichtung nach einem der Ansprüche 1 bis 18, **dadurch gekennzeichnet, dass** die Trennvorrichtung vor dem ersten Trennabschnitt (5) oder zwischen dem ersten Trennabschnitt (5) und dem zweiten Trennabschnitt (8) einen Verzweigungsabschnitt (19) aufweist, von dem ausgehend ein zweiter Transportweg (18) von dem ersten Transportweg (15) abzweigt.

20. Verfahren zum Abtrennen von Teilen einer Flüssigkeit, die flüssige Bestandteile und zumindest einen Typ von Partikeln und/oder zumindest einen Komplexe von miteinander verbundenen Partikeln zumindest eines Typs aufweist, mit einer Trennvorrichtung nach einem der Ansprüche 1 bis 19 umfassend folgende Schritte:
- spätestens nach einer Inkubationszeit, während der sich in dem Inkubationsabschnitt (4) zumindest einzelne Komplexe ausgebildet haben, wird die Flüssigkeit auf einen ersten Trennabschnitt (5) der Trennvorrichtung;
- in dem ersten Trennabschnitt (5) werden durch Mikrostrukturelemente die Komplexe zurückgehalten und/oder die Bewegung der Komplexe und/oder von bestimmten Typen der Partikel verzögert;
- in dem Sammelabschnitts (11) der Trennvorrichtung werden anschließend die abgetrennten Teile der flüssigen Bestandteile und der Partikel und/oder Komplexe gesammelt.

21. Verfahren nach Anspruch 20, **dadurch gekennzeichnet, dass** in dem zweiten Trennabschnitt (8) der Trennvorrichtung die Komplexe und/oder die Partikel zurückgehalten und/oder die Bewegung von bestimmten Typen der Partikel verzögert werden.

22. Verfahren nach Anspruch 20 oder 21, **dadurch gekennzeichnet, dass** vor dem Beginn der Inkubationszeit zu der Flüssigkeit zumindest eine Substanz zugesetzt wird, die eine Herstellung und/oder eine Begünstigung der Herstellung von Komplexen von miteinander verbundenen Partikel bewirkt.

23. Verfahren nach Anspruch 22, **dadurch gekennzeichnet, dass** die Substanz, die Träger oder die Partikel Polymerkügelchen oder Glaskügelchen mit einem Durchmesser von 0,05 µm bis 200 µm sind.

24. Verfahren nach Anspruch 23, **dadurch gekennzeichnet, dass** die Träger mit einer oder mehreren Substanzen beschichtet sind.

25. Verfahren nach einem der Ansprüche 20 bis 24, **dadurch gekennzeichnet, dass** die Flüssigkeit zur Inkubation in einen Inkubationsabschnitt (4) der Trennvorrichtung gebracht wird.

26. Verfahren nach Anspruch 25, **dadurch gekennzeichnet, dass** die zumindest eine Substanz in einem Resuspensionsabschnitt (3) der Trennvorrichtung resuspendiert wird.

27. Verfahren nach einem der Ansprüche 20 bis 21, **dadurch gekennzeichnet, dass** die Komplexe zumindest zum Teil durch Agglomeration, Agglutination und/oder Koagulation der Partikel gebildet werden.

28. Verfahren nach einem der Ansprüche 20 bis 27, **dadurch gekennzeichnet, dass** die Substanz antikörperbeschichtete Teile umfasst und dass die Komplexe zumindest zum Teil durch Bindung von Antigenfraktionen auf Membranen von den Partikeln umfassten biologischen Zellen gebildet werden.

29. Verfahren nach einem der Ansprüche 20 bis 28, **dadurch gekennzeichnet, dass** die Bewegung der Komplexe und/oder der Partikel durch die Mikrostrukturelemente in dem ersten Trennabschnitt (5) zumindest zum Teil verzögert wird und die Komplexe zumindest zum Teil durch dessen Mikrostrukturelemente zurückgehalten werden.

30. Verfahren nach einem der Ansprüche 20 bis 29, **dadurch gekennzeichnet, dass** die Komplexe durch die Mikrostrukturelemente der zweiten Trennvorrichtung zurückgehalten und/oder die Partikel zum Teil durch diese Mikrostrukturelemente zurückgehalten und/oder die Bewegung zumindest eines Teils der Partikel durch diese Mikrostrukturelemente verzögert wird.

31. Verfahren nach einem der Ansprüche 20 bis 30, **dadurch gekennzeichnet, dass** die abgetrennten Teile der flüssigen Bestandteile und der Partikel und/oder Komplexe in dem Sammelabschnitt analysiert werden.

32. Verfahren nach einem der Ansprüche 20 bis 31, **dadurch gekennzeichnet, dass** die in dem ersten Trennabschnitt (5) oder im zweiten Trennabschnitt (8) konzentrierten Partikel und/oder Komplexe analysiert werden.

33. Verfahren nach einem der Ansprüche 20 bis 32, **dadurch gekennzeichnet, dass** Partikel und/oder Komplexe in den Transportwegen (15, 18) analysiert werden.

34. Verfahren nach einem der Ansprüche 20 bis 33, **dadurch gekennzeichnet, dass** die Analyse eine optische und/oder elektrochemische Detektion umfasst.

35. Verfahren nach einem der Ansprüche 20 bis 34. **dadurch gekennzeichnet, dass** in einem zweiten Sammelabschnitt ein anderer Typ von Partikeln konzentriert wird als im ersten Sammelbereich (11).

36. Verfahren nach einem der Ansprüche 20 bis 30, **dadurch gekennzeichnet, dass** die Sammelabschnitt Reaktionsmittel enthalten.

37. Verfahren nach einem der Ansprüche 20 bis 31, **dadurch gekennzeichnet, dass** die Flüssigkeit durch Kapillarkraft oder in der Größenordnung vergleichbare Kräfte, zum Beispiel elektroosmotische Kraft transportiert wird.

## Claims

1. Microstructured separation device for separating parts of a liquid which comprises liquid components and at least one type of particle and/or at least one complex of interconnected particles of at least one type, with the following features:
- the device comprises an inlet (2) for the liquid, a collection section (11), and a transport path (15) from the inlet (2) to the collection section (11) ;
- the transport path (15) comprises, situated one after the other in the direction of transport, a first separation section (5) for holding back at least some of the complexes and/or for slowing down the movement of at least some of the complexes and/or at least some of the particles, and a second separation section (8) for holding back at least some of the complexes and/or at least some of the particles and/or for slowing down the movement of the particles;
- the first separation section (5) and second separation section (8) have a microstructure with one or more microstructure elements
- the transport path (15) also comprises a resuspension section (3) and an incubation section (4),
- at least one substance for producing the complexes from particles and/or for promoting the production of the complexes from the particles is arranged in the resuspension section
- the incubation section is suitable and intended to give the at least one substance received in the resuspension section the possibility of contributing to the formation of the complexes before the liquid reaches the first separation section, and
- by means of the design of the incubation section, in particular the cross-sectional surface, length, configuration and/or surface properties of the incubation section, the flow speed and the dwell time of the liquid in the incubation section is set in a reproducible manner,
**characterized in that**
- the microstructure elements of the first separation section (5) have pockets (6a) open in the direction of the inlet (2) and/or the microstructure elements at least in part enclose, together with boundary surfaces of the transport path adjacent to the microstructure elements, pockets (6b) open in the direction of the inlet (2),
- the microstructure elements of the first separation section (5) delimit one or more first through-openings (16) which have geometric dimensions allowing the particles and the complexes to pass through,
- the microstructure elements of the second separation section (8) delimit one or more first through-openings (16) which have geometric dimensions allowing the particles and the complexes to pass through, and
- the microstructure elements of the first separation section (5) delimit second through-openings (17) which have geometric dimensions allowing only the particles or particles of certain types to pass through,
- wherein the width of the first through-openings (16) and/or second through-openings (17) is from 1 µm to 500 µm.

2. Separation device according to Claim 1, **characterized in that** the microstructure elements of the first separation section (5) comprise columns or steles.

3. Separation device according to Claim 2, **characterized in that** the columns have a rectangular or oval cross section.

4. Separation device according to one of Claims 1 to 3, **characterized in that** the microstructure elements of the first separation section comprise at least one web (53).

5. Separation device according to Claim 4, **characterized in that** the webs (53) are arranged transversely or obliquely with respect to the direction of transport.

6. Separation device according to one of claims 1 to 5, **characterized in that** the second through-openings (17) are provided in part in the pockets (6a, 6b) of the microstructure elements of the first separation section (5).

7. Separation device according to one of Claims 1 to 6, **characterized in that** the first through-openings (16) have a height of 1 µm to 500 µm.

8. Separation device according to one of Claims 1 to 7, **characterized in that** the area of passage of the first through-openings (16) decreases in the direction of transport.

9. Separation device according to one of Claims 1 to 8, **characterized in that** the second through-openings (16) have a height of 0.1 µm to 10 µm.

10. Separation device according to one of Claims 1 to 9, **characterized in that** the area of passage of the second through-openings (16) decreases in the direction of transport.

11. Separation device according to Claim 10, **characterized in that** the at least one substance adheres, dried on, to at least one boundary surface of the resuspension section (3).

12. Separation device according to either of Claims 10 and 11, **characterized in that** at least one of the substances is arranged in the form of a pellet, a tablet or a powder in the resuspension section (3).

13. Separation device according to one of Claims 10 to 12, **characterized in that** at least one of the substances is mounted on a support, or the support is immersed in the substance, said support being arranged in the resuspension section (3).

14. Separation device according to one of Claims 1 to 13, **characterized in that** at least some of the particles are particles of biological origin, for example cells or their organelles, viruses or similar, the substance or one of the substances causes, promotes or accelerates an aggregation, agglomeration, agglutination and/or coagulation of the living particles, the substance or one of the substances at least partly binds to an antigen fraction on the surface of the cell, and the substance contains a support coated with antibodies or lectins.

15. Separation device according to one of Claims 1 to 14, **characterized in that** the substance or the support is arranged in a recess in one of the boundary surfaces of the resuspension section (3).

16. Separation device according to one of Claims 1 to 16, **characterized in that** the microstructure elements of the second separation section (8) comprise a stairway.

17. Separation device according to one of Claims 1 to 16, **characterized in that** the microstructure elements of the second separation section (8) comprise columns spaced apart from one another.

18. Separation device according to one of Claims 1 to 17, **characterized in that** the microstructure elements of the second separation section (8) comprise one or more webs (83).

19. Separation device according to one of Claims 1 to 18, **characterized in that** the separation device has a branch section (19) before the first separation section (5) or between the first separation section (5) and the second separation section (8), from which branch section (19) a second transport path (18) branches off from the first transport path (15).

20. Method for separating parts of a liquid which comprises liquid components and at least one type of particle and/or at least one complex of interconnected particles of at least one type with a separation device according to one of Claims 1 to 19, comprising the following steps:
- at the latest after an incubation period during which at least individual complexes have formed in the incubation section (4), the liquid is put onto a first separation section (5) of the separation device;
- in the first separation section (5), the complexes are held back and/or the movement of the complexes and/or of certain types of particles is slowed down by microstructure elements;
- the separated parts of the liquid components and of the particles and/or complexes are then collected in the collection section (11) of the separation device.

21. Method according to Claim 20, **characterized in that** the complexes and/or the particles are held back and/or the movement of certain types of particles is slowed down in the second separation section (8) of the separation device.

22. Method according to Claim 20 or 21, **characterized in that**, prior to the start of the incubation period, at least one substance producing and/or promoting the production of complexes of interconnected particles is added to the liquid.

23. Method according to Claim 22, **characterized in that** the substance, the supports or the particles are polymer spheres or glass spheres with a diameter of 0.05 µm to 200 µm.

24. Method according to Claim 23, **characterized in that** the supports are coated with one or more substances.

25. Method according to one of Claims 20 to 24, **characterized in that** the liquid is introduced into an incubation section (4) of the separation device for incubation.

26. Method according to Claim 25, **characterized in that** the at least one substance is resuspended in a resuspension section (3) of the separation device.

27. Method according to one of Claims 20 to 21, **characterized in that** the complexes are formed at least in part by agglomeration, agglutination and/or coagulation of the particles.

28. Method according to one of Claims 20 to 27, **characterized in that** the substance comprises antibody-coated parts, and the complexes are formed at least in part by binding of antigen fractions on membranes of the biological cells included in the particles.

29. Method according to one of Claims 20 to 28, **characterized in that** the movement of the complexes and/or of the particles is slowed down at least in part by the microstructure elements in the first separation section (5), and the complexes are at least in part held back by said microstructure elements.

30. Method according to one of Claims 20 to 29, **characterized in that** the complexes are held back by the microstructure elements of the second separation device and/or some of the particles are held back by these microstructure elements and/or the movement of at least some of the particles is slowed down by these microstructure elements.

31. Method according to one of Claims 20 to 30, **characterized in that** the separated parts of the liquid components and of the particles and/or complexes are analyzed in the collection section.

32. Method according to one of Claims 20 to 31, **characterized in that** the particles and/or complexes concentrated in the first separation section (5) or in the second separation section (8) are analyzed.

33. Method according to one of Claims 20 to 32, **characterized in that** particles and/or complexes are analyzed in the transport paths (15, 18).

34. Method according to one of Claims 20 to 33, **characterized in that** the analysis comprises optical and/or electrochemical detection.

35. Method according to one of Claims 20 to 34, **characterized in that**, in a second collection section, a type of particle is concentrated which is different than that in the first collection section (11).

36. Method according to one of Claims 20 to 30, **characterized in that** the collection sections contain reagents.

37. Method according to one of Claims 20 to 31, **characterized in that** the liquid is transported by capillary force or by forces of comparable order, for example electroosmotic force.

## Revendications

1. Dispositif de séparation microstructuré, destiné à la séparation de parties d'un liquide qui comporte des composants liquides et au moins un type de particules et/ou au moins un complexe de particules d'au moins un type, assemblées entre elles, ayant les caractéristiques suivantes :
- le dispositif comprend un orifice d'entrée (2) pour le liquide, une section collectrice (11) et une voie de transport (15) s'étendant de l'orifice d'entrée (2) à la section collectrice (11) ;
- la voie de transport (15) comprend, successivement dans le sens du transport, une première section de séparation (5) destinée à retenir au moins une partie des complexes et/ou à ralentir le déplacement d'au moins une partie des complexes et/ou d'au moins une partie des particules et une deuxième section de séparation (8) destinée à retenir au moins une partie des complexes et/ou au moins une partie des particules et/ou à ralentir le déplacement des particules ;
- aussi bien la première section de séparation (5) que la deuxième section de séparation (8) présentent une microstructure comportant un ou plusieurs éléments de microstructure
- la voie de transport (15) comprend en outre une section de remise en suspension (3) et une section d'incubation (4),
- dans la section de remise en suspension est disposée au moins une substance destinée à la production des complexes à partir de particules et/ou à favoriser la production des complexes à partir des particules,
- la section d'incubation est appropriée et conçue pour offrir à ladite au moins une substance, admise dans la section de remise en suspension, la possibilité de contribuer à la formation des complexes, avant que le liquide atteigne la première section de séparation, et
- la vitesse d'écoulement et la durée de séjour du liquide dans la section d'incubation sont ajustées de façon reproductible par la configuration de la section d'incubation, en particulier de la surface de la section transversale, de la longueur, de la forme et/ou des propriétés de la surface de la section d'incubation,
**caractérisé en ce que**
- les éléments de microstructure de la première section de séparation (5) comportent des poches (6a) ouvertes en direction de l'orifice d'entrée (2) et/ou les éléments de microstructure comprennent, au moins en partie avec les surfaces de délimitation de la voie de transport, adjacentes aux éléments de microstructure, des poches (6b) ouvertes en direction de l'orifice d'entrée (2),
- les éléments de microstructure de la première section de séparation (5) délimitent une ou plusieurs premières ouvertures de passage (16), qui ont des dimensions géométriques qui permettent le passage des particules et des complexes,
- les éléments de microstructure de la deuxième section de séparation (8) délimitent une ou plusieurs premières ouvertures de passage (16), qui ont des dimensions géométriques qui permettent le passage des particules et des complexes, et
- les éléments de microstructure de la première section de séparation (5) délimitent des deuxièmes ouvertures de passage (17), qui ont des dimensions géométriques qui ne permettent que le passage des particules ou de certains types de particules,
- la largeur des premières ouvertures de passage (16) et/ou des deuxièmes ouvertures de passage (17) vaut de 1 µm à 500 µm.

2. Dispositif de séparation selon la revendication 1, **caractérisé en ce que** les éléments de microstructure de la première section de séparation (5) comprennent des colonnes ou des stèles.

3. Dispositif de séparation selon la revendication 2, **caractérisé en ce que** les colonnes ont une section transversale rectangulaire ou ovale.

4. Dispositif de séparation selon l'une quelconque des revendications 1 à 3, **caractérisé en ce que** les éléments de microstructure de la première section de séparation comprennent au moins une cloison (53).

5. Dispositif de séparation selon la revendication 4, **caractérisé en ce que** les cloisons (53) sont disposées transversalement ou obliquement par rapport au sens de transport.

6. Dispositif de séparation selon l'une quelconque des revendications 1 à 5, **caractérisé en ce que** les deuxièmes ouvertures de passage (17) sont en partie prévues dans les poches (6a, 6b) des éléments de microstructure de la première section de séparation (5).

7. Dispositif de séparation selon l'une quelconque des revendications 1 à 6, **caractérisé en ce que** les premières ouvertures de passage (16) ont une hauteur de 1 µm à 500 µm.

8. Dispositif de séparation selon l'une quelconque des revendications 1 à 7, **caractérisé en ce que** la surface de passage des premières ouvertures de passage (16) diminue dans le sens du transport.

9. Dispositif de séparation selon l'une quelconque des revendications 1 à 8, **caractérisé en ce que** les deuxièmes ouvertures de passage (17) ont une hauteur de 0,1 µm à 10 µm.

10. Dispositif de séparation selon l'une quelconque des revendications 1 à 9, **caractérisé en ce que** la surface de passage des deuxièmes ouvertures de passage (16) diminue dans le sens du transport.

11. Dispositif de séparation selon la revendication 10, **caractérisé en ce que** ladite au moins une substance adhère en étant séchée à au moins une surface de délimitation de la section de remise en suspension (3).

12. Dispositif de séparation selon la revendication 10 ou 11, **caractérisé en ce qu'**au moins l'une des substances est disposée sous forme d'un granule, d'un comprimé ou d'une poudre dans la section de remise en suspension (3).

13. Dispositif de séparation selon l'une quelconque des revendications 10 à 12, **caractérisé en ce qu'**au moins l'une des substances est appliquée sur une matière porteuse ou **en ce que** la matière porteuse est imprégnée dans la substance, la matière porteuse étant disposée dans la section de remise en suspension (3).

14. Dispositif de séparation selon l'une quelconque des revendications 1 à 13, **caractérisé en ce que** les particules sont au moins en partie des particules d'origine biologique, par exemple des cellules ou leurs organites, des virus ou similaires, **en ce que** la substance ou l'une des substances provoque une agrégation, agglomération, agglutination et/ou coagulation des particules vivantes, favorisée ou accélérée, **en ce que** la substance ou l'une des substances se lie au moins en partie à une fraction antigénique à la surface de la cellule et **en ce que** la substance contient une matière porteuse revêtue avec des anticorps ou des lectines.

15. Dispositif de séparation selon l'une quelconque des revendications 1 à 14, **caractérisé en ce que** la substance ou la matière porteuse est déposée dans un creux dans l'une des surfaces de délimitation de la section de remise en suspension (3).

16. Dispositif de séparation selon l'une quelconque des revendications 1 à 15, **caractérisé en ce que** les éléments de microstructure de la deuxième section de séparation (8) comprennent un escalier.

17. Dispositif de séparation selon l'une quelconque des revendications 1 à 16, **caractérisé en ce que** les éléments de microstructure de la deuxième section de séparation (8) comprennent des colonnes espacées les unes des autres.

18. Dispositif de séparation selon l'une quelconque des revendications 1 à 17, **caractérisé en ce que** les éléments de microstructure de la deuxième section de séparation (8) comprennent une ou plusieurs cloisons (83).

19. Dispositif de séparation selon l'une quelconque des revendications 1 à 18, **caractérisé en ce que** le dispositif de séparation comporte avant la première section de séparation (5) ou entre la première section de séparation (5) et la deuxième section de séparation (8) une section de ramification (19), à partir de laquelle une deuxième voie de transport (18) se sépare de la première voie de transport (15).

20. Procédé pour la séparation de parties d'un liquide qui comporte des composants liquides et au moins un type de particules et/ou au moins un complexe de particules d'au moins un type, assemblées entre elles, à l'aide d'un dispositif de séparation selon l'une quelconque des revendications 1 à 19, comprenant les étapes suivantes :
- au plus tard après un temps d'incubation, pendant lequel au moins des complexes individuels se sont formés dans la section d'incubation (4), on le liquide à une première section de séparation (5) du dispositif de séparation ;
- dans la première section de séparation (5) les complexes sont retenus et/ou le déplacement des complexes et/ou de certains types des particules est ralenti, par des éléments de microstructure ;
- ensuite les parties séparées des composants liquides et des particules et/ou des complexes sont collectées dans la section collectrice (11) du dispositif de séparation.

21. Procédé selon la revendication 20, **caractérisé en ce que** dans la deuxième section de séparation (8) du dispositif de séparation les complexes et/ou les particules sont retenus et/ou le déplacement de certains types des particules est ralenti.

22. Procédé selon la revendication 20 ou 21, **caractérisé en ce qu'**avant le début du temps d'incubation on ajoute au liquide au moins une substance qui a pour effet une production et/ou de favoriser la production de complexes de particules assemblées entre elles.

23. Procédé selon la revendication 22, **caractérisé en ce que** la substance, les matières porteuses ou les particules sont des perles de polymère ou des perles de verre ayant un diamètre de 0,05 µm à 200 µm.

24. Procédé selon la revendication 23, **caractérisé en ce que** les matières porteuses sont revêtues avec une ou de plusieurs substances.

25. Procédé selon l'une quelconque des revendications 20 à 24, **caractérisé en ce que** pour l'incubation on introduit le liquide dans une section d'incubation (4) du dispositif de séparation.

26. Procédé selon la revendication 25, **caractérisé en ce que** ladite au moins une substance est remise en suspension dans une section de remise en suspension (3) du dispositif de séparation.

27. Procédé selon l'une quelconque des revendications 20 et 21, **caractérisé en ce que** les complexes sont formés au moins en partie par agglomération, agglutination et/ou coagulation des particules.

28. Procédé selon l'une quelconque des revendications 20 à 27, **caractérisé en ce que** la substance comprend des éléments revêtus avec des anticorps et **en ce que** les complexes sont formés au moins en partie par fixation de fractions antigéniques sur des membranes de cellules biologiques comprises dans les particules.

29. Procédé selon l'une quelconque des revendications 20 à 28, **caractérisé en ce que** le déplacement des complexes et/ou des particules est au moins en partie retardé par les éléments de microstructure dans la première section de séparation (5) et les complexes sont au moins en partie retenus par ses éléments de microstructure.

30. Procédé selon l'une quelconque des revendications 20 à 29, **caractérisé en ce que** les complexes sont retenus par les éléments de microstructure du deuxième dispositif de séparation et/ou les particules sont en partie retenues par ces éléments de microstructure et/ou le déplacement d'au moins une partie des particule est retardé par ces éléments de microstructure.

31. Procédé selon l'une quelconque des revendications 20 à 30, **caractérisé en ce que** les parties séparées des composants liquides et des particules et/ou complexes sont analysées dans la section collectrice.

32. Procédé selon l'une quelconque des revendications 20 à 31, **caractérisé en ce que** les particules et/ou complexes concentré(e)s dans la première section de séparation (5) ou dans la deuxième section de séparation (8) sont analysé(e)s.

33. Procédé selon l'une quelconque des revendications 20 à 32, **caractérisé en ce que** les particules et/ou complexes sont analysé(e)s dans les voies de transport (15, 18).

34. Procédé selon l'une quelconque des revendications 20 à 33, **caractérisé en ce que** l'analyse comprend une détection optique et/ou électrochimique.

35. Procédé selon l'une quelconque des revendications 20 à 34, **caractérisé en ce que** dans une deuxième section collectrice un autre type de particules est concentré comme dans la première zone collectrice (11).

36. Procédé selon l'une quelconque des revendications 20 à 30, **caractérisé en ce que** les sections collectrices contiennent des réactifs.

37. Procédé selon l'une quelconque des revendications 20 à 31, **caractérisé en ce que** le liquide est transporté par force capillaire ou des forces comparables en ordre de grandeur, force électro-osmotique par exemple.
